(19) Europäisches Patentamt
European Patent Office
Office européen des brevets

(11) **EP 4 668 925 A1**

(12) **EUROPEAN PATENT APPLICATION**
published in accordance with Art. 153(4) EPC

(43) Date of publication:
**24.12.2025 Bulletin 2025/52**

(21) Application number: **24728852.5**

(22) Date of filing: **16.02.2024**

(51) International Patent Classification (IPC):
**H04W 72/02** (2009.01)     **H04W 72/25** (2023.01)
**H04W 72/04** (2023.01)     **H04B 17/318** (2015.01)
**H04W 92/18** (2009.01)

(52) Cooperative Patent Classification (CPC):
**H04B 17/318; H04W 72/02; H04W 72/04;**
**H04W 72/25; H04W 92/18**

(86) International application number:
**PCT/KR2024/095300**

(87) International publication number:
**WO 2024/172595 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023   US 202363446354 P**
**06.04.2023   US 202363457790 P**

(71) Applicant: **LG Electronics Inc.**
**Seoul 07336 (KR)**

(72) Inventors:
• **LEE, Seungmin**
  **Seoul 06772 (KR)**
• **HWANG, Daesung**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR CARRYING OUT DEVICE-TO-DEVICE COMMUNICATION IN FR2**

(57)     An operation method of a first device 100 in wireless communication system is proposed. The method may include: performing monitoring within a first time resource based on a first spatial filter; selecting a first resource based on a resource selection procedure for a transmission operation; and performing the transmission operation, based on the first resource and a second spatial filter, wherein whether a result of the monitoring is used in the resource selection procedure may be determined based on whether the first spatial filter covers the second spatial filter.

FIG. 12

```
┌────────────────────────────────────────────┐
│ performing monitoring within a first time   │──── S1210
│ resource based on a first spatial filter    │
└────────────────────────────────────────────┘
                      │
                      ▼
┌────────────────────────────────────────────┐
│ selecting a first resource based on a       │──── S1220
│ resource selection procedure for a          │
│ transmission operation                      │
└────────────────────────────────────────────┘
                      │
                      ▼
┌────────────────────────────────────────────┐
│ performing a transmission operation,        │──── S1230
│ based on a first resource and a second      │
│ spatial filter                              │
└────────────────────────────────────────────┘
```

EP 4 668 925 A1

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

## DISCLOSURE

### TECHNICAL SOLUTION

According to an embodiment of the present disclosure, a method for performing, by a first device, wireless communication may be proposed. For example, the method may comprise: performing monitoring within a first time resource based on a first spatial filter; selecting a first resource based on a resource selection procedure for a transmission operation; and performing the transmission operation, based on the first resource and a second spatial filter, wherein whether a result of the monitoring is used in the resource selection procedure may be determined based on whether the first spatial filter covers the second spatial filter.

According to an embodiment of the present disclosure, a first device for performing wireless communication may be proposed. For example, the first device may comprise: at least one transceiver; at least one processor; and at least one memory operably connectable to the at least one processor and storing instructions. For example, the instructions, based on being executed by the at least one processor, may cause the first device to perform operations, wherein the operations may comprise: performing monitoring within a first time resource based on a first spatial filter; selecting a first resource based on a resource selection procedure for a transmission operation; and performing the transmission operation, based on the first resource and a second spatial filter, wherein whether a result of the monitoring is used in the resource selection procedure may be determined based on whether the first spatial filter covers the second spatial filter.

According to an embodiment of the disclosure, a device adapted to control a first user equipment, UE, may be proposed. For example, the device may comprise: at least one processor; and at least one memory operably connectable to the at least one processor and storing instructions. For example, the instructions, based on being executed by the at least one processor, may cause the first UE to perform operations, wherein the operations may comprise: performing monitoring within a first time resource based on a first spatial filter; selecting a first resource based on a resource selection procedure for a transmission operation; and performing the transmission operation, based on the first resource and a second spatial filter, wherein whether a result of the monitoring is used in the resource selection procedure may be determined based on whether the first spatial filter covers the second spatial filter.

According to an embodiment of the disclosure, a non-transitory computer-readable storage medium storing instructions may be proposed. For example, the instructions, based on being executed, may cause a first device to: perform monitoring within a first time resource based on a first spatial filter; select a first resource based on a resource selection procedure for a transmission operation; and perform the transmission operation, based on the first resource and a second spatial filter, wherein whether a result of the monitoring is used in the resource selection procedure may be determined based on whether the first spatial filter covers the second spatial filter.

According to an embodiment of the present disclosure, a method for performing, by a second device, wireless communication may be proposed. For example, the method may comprise: receiving a transmission which a first device transmits, based on a first resource, wherein a transmission operation for the transmission may be performed based on a second spatial filter, wherein the first resource may be selected based on a resource selection procedure, and wherein whether a result of monitoring performed within a first time resource is used in the resource selection procedure may be determined, based on whether a first spatial filter on which the monitoring is based covers the second spatial filter.

According to an embodiment of the present disclosure, a second device for performing wireless communication may be proposed. For example, the second device may comprise: at least one transceiver; at least one processor; and at least one memory operably connectable to the at least one processor and storing instructions. For example, the instructions, based on being executed by the at least one processor, may cause the second device to perform operations, wherein the operations may comprise: receiving a transmission which a first device transmits, based on a first resource, wherein a transmission operation for the transmission may be performed based on a second spatial filter, wherein the first resource may be selected based on a resource selection procedure, and wherein whether a result of monitoring performed within a first time resource is used in the resource selection procedure may be determined, based on whether a first spatial filter on which the monitoring is based covers the second spatial filter.

## BRIEF DESCRIPTION OF THE DRAWINGS

FIG. 1 shows a communication structure that can be provided in a 6G system, according to one embodiment of the present disclosure.

FIG. 2 shows an electromagnetic spectrum, according to one embodiment of the present disclosure.

FIG. 3 shows an example of an NTN typical scenario based on a transparent payload, according to one embodiment of the present disclosure.

FIG. 4 shows an example of an NTN typical scenario based on a regenerative payload, according to one embodiment of the present disclosure.

FIG. 5 shows an example of a sensing operation, according to one embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows a method in which a UE that has reserved transmission resource(s) informs another UE of the transmission resource(s), based on an embodiment of the present disclosure.

FIG. 10 shows a transmission spatial filter and a reception spatial filter, according to one embodiment of the present disclosure.

FIG. 11 shows a method for determining whether a reception spatial filter covers a transmission spatial filter, according to one embodiment of the present disclosure.

FIG. 12 shows a procedure for a first device to perform wireless communication, according to one embodiment of the present disclosure.

FIG. 13 shows a procedure for a second device to perform wireless communication, according to one embodiment of the present disclosure.

FIG. 14 shows a communication system 1, based on an embodiment of the present disclosure.

FIG. 15 shows wireless devices, based on an embodiment of the present disclosure.

FIG. 16 shows a signal process circuit for a transmission signal, based on an embodiment of the present disclosure.

FIG. 17 shows another example of a wireless device, based on an embodiment of the present disclosure.

FIG. 18 shows a hand-held device, based on an embodiment of the present disclosure.

FIG. 19 shows a vehicle or an autonomous vehicle, based on an embodiment of the present disclosure.

**MODE FOR INVENTION**

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

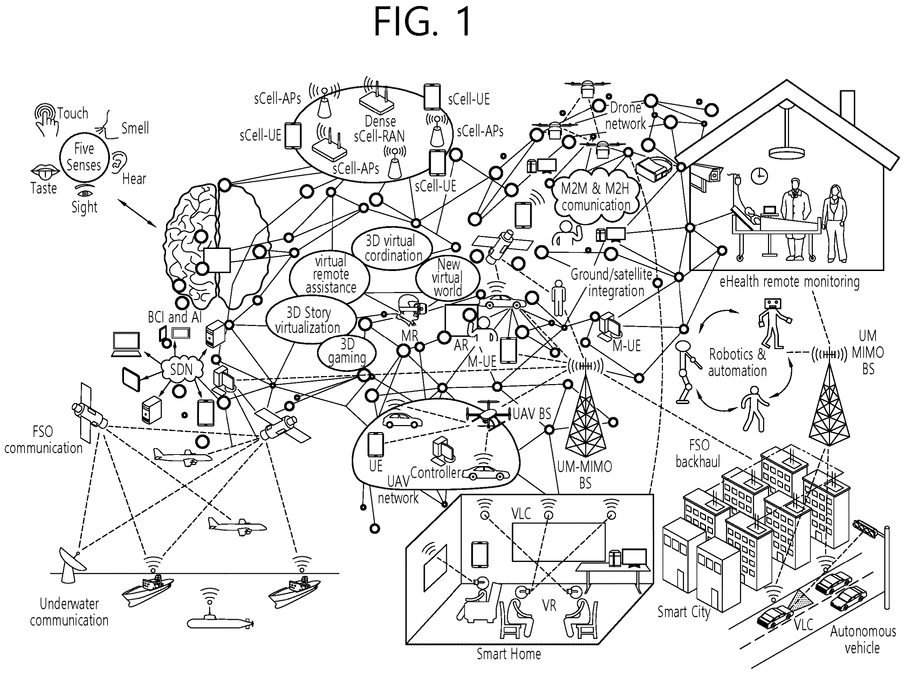

FIG. 1 shows a communication structure that can be provided in a 6G system, according to one embodiment of the present disclosure. The embodiment of FIG. 1 may be combined with various embodiments of the present disclosure.

In 6G, new network features may include the follows.

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

The following describes the core implementation technologies for 6G systems.

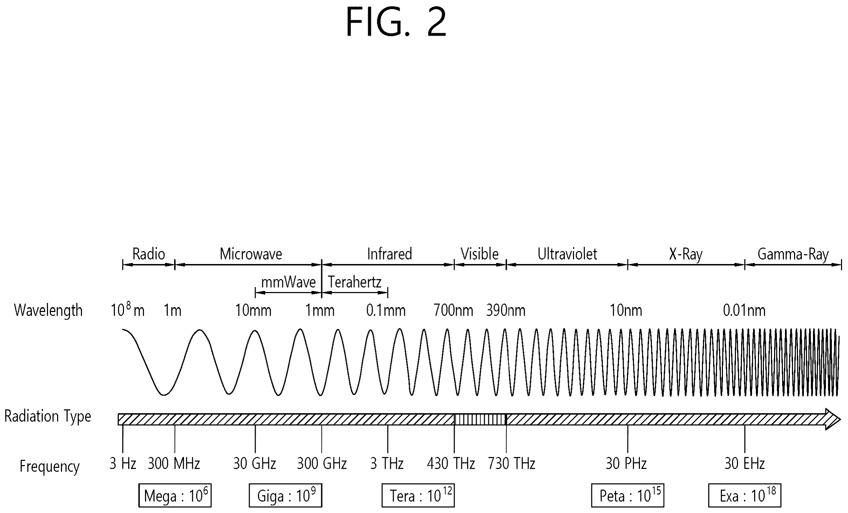

- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.

- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.

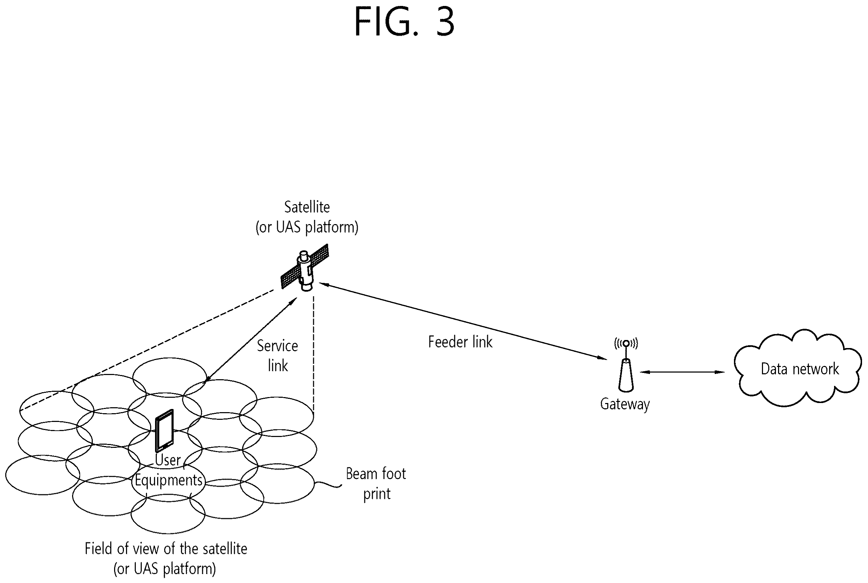

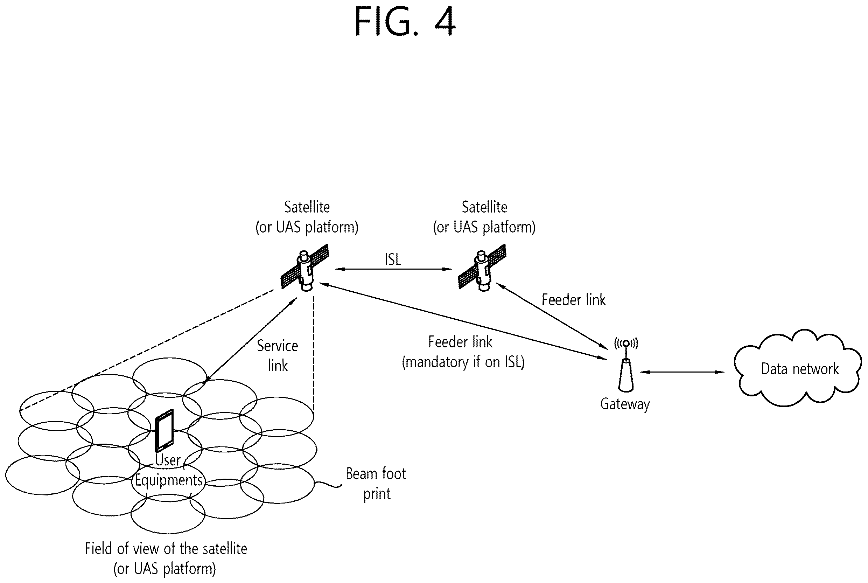

- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).

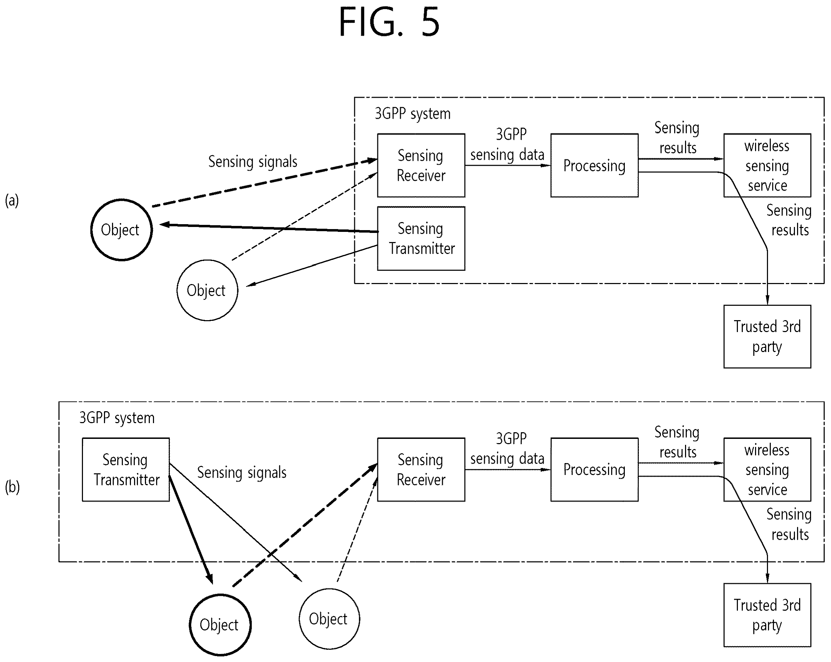

- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), the number of slots per frame ($N^{frame,u}_{slot}$), and the number of slots per subframe ($N^{subframe,u}_{slot}$), according to an SCS configuration (u), when Normal CP or Extended CP is used.

[Table 2]

| CP Type | SCS ($15*2^u$) | $N^{slot}_{symb}$ | $N^{frame,u}_{slot}$ | $N^{subframe,u}_{slot}$ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

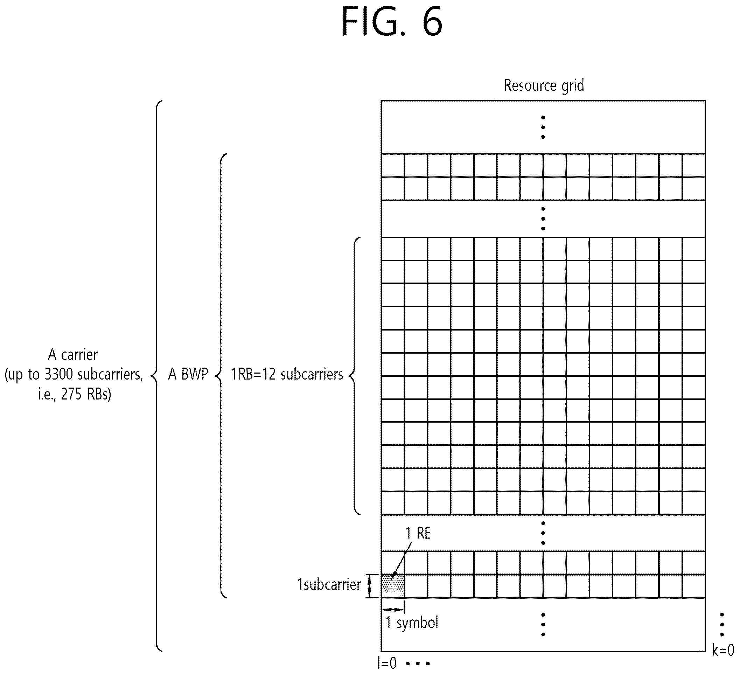

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

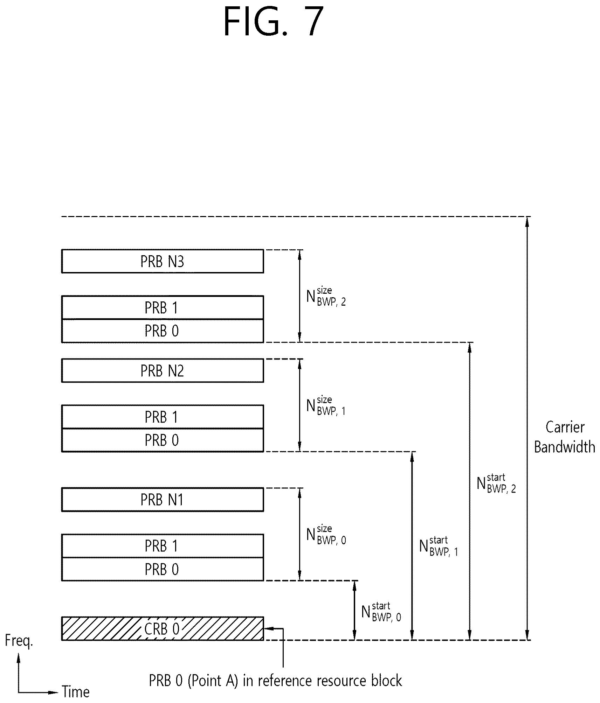

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

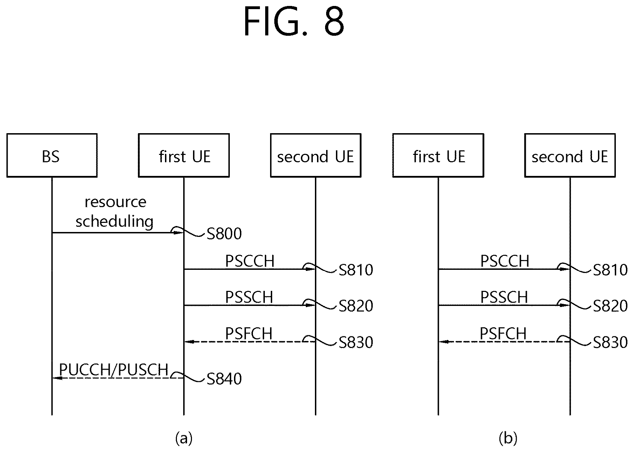

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in the resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s).

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources ($r'_0, r'_1, r'_2, \cdots$) which may be subject to pre-emption.
- it is up to UE implementation to determine the subset of resources as requested by higher layers before or after the slot

$$r''_i - T_3$$ , where $r''_i$ is the slot with the smallest slot index among $(r_0, r_1, r_2, ...)$ and ($r'_0, r'_1, r'_2, \cdots$), and $T_3$ is equal to $T^{SL}_{proc,1}$, where $T^{SL}_{proc,1}$ is defined in slots, and where $\mu_{SL}$ is the SCS configuration of the SL BWP.

The following higher layer parameters affect this procedure:

sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$ .

Notation:

( $t'^{SL}_0, t'^{SL}_1, t'^{SL}_2, \dots$ ) may denote the set of slots which belongs to the sidelink resource pool.

For example, a UE may select a set of candidate resources (Sa) based on Table 3. For example, when resource (re)selection is triggered, a UE may select a candidate resource set (Sa) based on Table 3. For example, when re-evaluation or pre-emption is triggered, a UE may select a candidate resource set (Sa) based on Table 3.

[Table 3]

The following steps are used:

1) A candidate single-slot resource for transmission $R_{x,y}$ is defined as a set of $L_{subCH}$ contiguous sub-channels with sub-channel $x+j$ in slot $t'^{SL}_y$ where $j = 0,..., L_{subCH}$ - 1. The UE shall assume that any set of $L_{subCH}$ contiguous sub-channels included in the corresponding resource pool within the time interval $[n + T_1, n + T_2]$ correspond to one candidate single-slot resource, where

- selection of $T_1$ is up to UE implementation under $0 \leq T_1 \leq T^{SL}_{proc,1}$ , where $T^{SL}_{proc,1}$ is defined in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the i-th field in *sl-Thres-RSRP-List,* where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

**10**

(continued)

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines

according to clause 8.1.5 the set of resource blocks and slots which overlaps with $R_{x,y+j \times P'_{rsvp\_TX}}$ for q=1, 2, ...,

Q andj=0, 1, ..., $C_{resel}$ - 1. Here, $P'_{rsvp\_RX}$ is $P_{rsvp\_RX}$ converted to units of logical slots according to clause 8.1.7,

$Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot n belongs to the set (

$t'^{SL}_0, t'^{SL}_1, \ldots, t'^{SL}_{T'_{max}-1}$ ), otherwise slot $t'^{SL}_{n'}$ is the first slot after slot n belonging to the set (

$t'^{SL}_0, t'^{SL}_1, \ldots, t'^{SL}_{T'_{max}-1}$ ); otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set ($r_0$, $r_1$, $r_2$, ...) is not a member of $S_A$, then the UE shall report re-evaluation of the resource $r_i$ to higher layers.

If a resource $r'_i$ from the set ( $r'_0, r'_1, r'_2, \ldots$ ) meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

- *sl-PreemptionEnable* is provided and is equal to 'enabled' and $prio_{TX} > prio_{RX}$

- *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 4 and 5.

[Table 4]

In sidelink transmission mode 4, when requested by higher layers in subframe *n* for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers. In sidelink transmission mode 3, when requested by higher layers in subframe *n* for a carrier, the UE shall determine the set of resources to be reported to higher layers in sensing measurement according to the steps described in this Subclause. Parameters $L_{subCI}$, $P_{rsvp\_TX}$ and $prio_{TX}$ are all provided by higher layers. $C_{resel}$ is determined by $C_{resel}$=10*SL_RESOURCE_RESELECTION_COUNTER, where SL_RESOURCE_RESELECTION_COUNTER is provided by higher layers.

If partial sensing is configured by higher layers then the following steps are used:

(continued)

1) A candidate single-subframe resource for PSSCH transmission $R_{x,y}$ is defined as a set of $L_{subCH}$ contiguous sub-channels with sub-channel $x+j$ in subframe $t_y^{SL}$ where $j=0,...,L_{subCH}-1$. The UE shall determine by its implementation a set of subframes which consists of at least Y subframes within the time interval $[n + T_1, n + T_2]$ where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where $i = (a - 1) * 8 + b$.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.

- PSSCH-RSRP measurement according to the received SCI format 1 is higher than $Th_{prioTX,prioRX}$.

- the SCI format received in subframe $t_m^{SL}$ or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P'_{rsvp\_TX}}$ for $q=1, 2, ..., Q$ and $j=0, 1, ..., C_{resel}-1$. Here, $Q = \dfrac{1}{P_{rsvp\_RX}}$ if $P_{rsvp\_RX} < 1$ and $y' - m \leq P_{step} \times P_{rsvp\_RX} + P_{step}$, where $t_{y'}^{SL}$ is the last subframe of the Y subframes, and $Q = 1$ otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 5]

7) For a candidate single-subframe resource $R_{x,y}$ remaining in the set $S_A$, the metric $E_{x,y}$ is defined as the linear average of S-RSSI measured in sub-channels $x+k$ for $k=0,...L_{subCH}-1$ in the monitored subframes in Step 2 that can be expressed by $t_{y-P_{step}*j}^{SL}$ for a non-negative integer $j$.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

(continued)

---

1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0,...,L_{subCH}-1$. The UE shall assume that any set of $L_{subCH}$ contiguous sub-channels included in the corresponding PSSCH resource pool within the time interval [$n+T_1$, $n+T_2$] corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time].

The UE shall report set $S_B$ to higher layers.

---

For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 6
- Beta_offset indicator - 2 bits as provided by higher layer parameter sl-BetaOffsets2ndSCI
- Number of DMRS port - 1 bit as defined in Table 7
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 6]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 7]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 8
- CSI request - 1 bit

[Table 8]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, in various embodiments of the present disclosure, a transmitting UE (i.e., TX UE) may be a UE which transmits data to (target) receiving UE(s) (i.e., RX UE(s)). For example, the TX UE may be a UE which performs PSCCH transmission and/or PSSCH transmission. For example, the TX UE may be a UE which transmits SL CSI-RS(s) and/or a SL CSI report request indication to (target) RX UE(s). For example, the TX UE may be a UE which transmits a (pre-defined) reference signal(s) (e.g., PSSCH demodulation reference signal (DM-RS)) and/or SL (L1) RSRP report request indicator, which is/are used for SL (L1) RSRP measurement, to (target) to RX UE(s). For example, the TX UE may be a UE which transmits a (control) channel (e.g., PSCCH, PSSCH, etc.) and/or reference signal(s) (e.g., DM-RS(s), CSI-RS(s), etc.) through the (control) channel, which is/are used for SL radio link monitoring (RLM) operation(s) and/or SL radio link failure (RLF) operation(s) of (target) RX UE(s).

Meanwhile, in various embodiments of the present disclosure, a receiving UE (i.e., RX UE) may be a UE which transmits SL HARQ feedback to transmitting UE(s) (i.e., TX UE(s)), based on whether or not data transmitted by TX UE(s) is decoded successfully and/or whether or not a PSCCH (related to PSSCH scheduling) transmitted by TX UE(s) is detected/decoded successfully. For example, the RX UE may be a UE which performs SL CSI transmission to TX UE(s) based on SL CSI-RS(s) and/or a SL CSI report request indication received from TX UE(s). For example, the RX UE may be a UE which transmits, to TX UE(s), an SL (L1) RSRP measurement value measured based on (pre-defined) reference signal(s) and/or SL (L1) RSRP report request indication received from TX UE(s). For example, the RX UE may be a UE which transmits its own data to TX UE(s). For example, the RX UE may be a UE which performs SL RLM operation(s) and/or SL RLF operation(s) based on a (pre-configured) (control) channel and/or reference signal(s) through the (control) channel received from TX UE(s).

Meanwhile, in various embodiments of the present disclosure, when a receiving UE transmits SL HARQ feedback information for a PSSCH and/or a PSCCH received from a transmitting UE, the following method may be considered or partly considered. Here, for example, the corresponding scheme or some schemes may be limitedly applied only when a receiving UE successfully decodes/detects a PSCCH for scheduling a PSSCH.

- Option 1: transmit NACK information only when PSSCH decoding/reception fails
- Option 2: transmit ACK information when PSSCH decoding/reception is successful, or transmit NACK information when fails

Meanwhile, in the present specification, for example, a transmitting UE may transmit at least one of the following information to the receiving UE through SCI. Here, for example, a transmitting UE may transmit at least one of the following information to a receiving UE through first SCI and/or a second SCI.

- PSSCH and/or PSCCH related resource allocation information, e.g., the number/positions of time/frequency resources, resource reservation information (e.g., period), and/or
- SL CSI report request indicator or SL (L1) RSRP (and/or SL (L1) RSRQ and/or SL (L1) RSSI) report request indicator, and/or
- SL CSI transmission indicator (or SL (L1) RSRP (and/or SL (L1) RSRQ and/or SL (L1) RSSI) information transmission indicator)) (on PSSCH), and/or
- MCS information, and/or
- Transmit power information, and/or
- L1 destination ID information and/or L1 source ID information, and/or
- SL HARQ process ID information, and/or
- New data indicator (NDI) information, and/or
- Redundancy version (RV) information, and/or
- (Transmission traffic/packet related) QoS information, e.g., priority information, and/or
- SL CSI-RS transmission indicator or information on the number of (to-be-transmitted) SL CSI-RS antenna ports, and/or
- Location information of a transmitting UE or location (or distance region) information of a target receiving UE (for which SL HARQ feedback is requested), and/or
- Reference signal (e.g., DMRS, etc.) related to channel estimation and/or decoding of data to be transmitted through a PSSCH, e.g., information related to a pattern of a (time-frequency) mapping resource of DMRS, rank information, antenna port index information

Meanwhile, in various embodiments of the present disclosure, for example, a PSCCH may be replaced/substituted with at least one of a SCI, a first SCI (1st-stage SCI), and/or a second SCI (2nd-stage SCI), or vice versa. For example, a SCI may be replaced/substituted with at least one of a PSCCH, a first SCI, and/or a second SCI, or vice versa. For example, a PSSCH may be replaced/substituted with a second SCI and/or a PSCCH, or vice versa

for example, if SCI configuration fields are divided into two groups in consideration of a (relatively) high SCI payload size, an SCI including a first SCI configuration field group may be referred to as a first SCI or a 1st SCI, and an SCI including a second SCI configuration field group may be referred to as a second SCI or a 2nd SCI. For example, the 1st SCI and the 2nd SCI may be transmitted through different channels. For example, the transmitting UE may transmit the first SCI to the receiving UE through the PSCCH. For example, the second SCI may be transmitted to the receiving UE through an (independent) PSCCH, or may be transmitted in a piggyback manner together with data through the PSSCH.

Meanwhile, in this specification, for example, "configuration" or "definition" may mean (pre)configuration from a base station or a network. For example, "configuration" or "define" may mean resource pool specific (pre)configuration from a base station or network. For example, a base station or a network may transmit information related to "configuration" or "definition" to a UE. For example, a base station or a network may transmit information related to "configuration" or "definition" to a UE through predefined signaling. For example, signaling to be pre-defined may include at least one of RRC signaling, MAC signaling, PHY signaling, and/or SIB.

Meanwhile, in this specification, for example, "configuration" or "definition" may mean designated or configured through signaling previously configured between UEs. For example, information related to "configuration" or "definition" may be transmitted/received through pre-configured signaling between UEs. For example, signaling to be pre-defined may be PC5 RRC signaling.

Meanwhile, in various embodiments of the present disclosure, for example, "RLF" may be interpreted as mutually extended to at least one of out of synch (OOS) and in synch (IS).

Meanwhile, in various embodiments of the present disclosure, for example, a resource block (RB) may be replaced/substituted with a subcarrier, or vice versa. For example, a packet or a traffic may be replaced/substituted with a transport block (TB) or a medium access control protocol data unit (MAC PDU) according to a transmission layer, or vice versa. For example, a code block group (CBG) may be replaced/substituted with a TB, or vice versa. For example, a source ID may be replaced/substituted with a destination ID, or vice versa. For example, an L1 ID may be replaced/substituted with an L2 ID, or vice versa. For example, the L1 ID may be an L1 source ID or an L1 destination ID. For example, the L2 ID may be an L2 source ID or an L2 destination ID.

Meanwhile, in various embodiments of the present disclosure, for example, operation(s) of a TX UE to reserve/select/determine retransmission resource(s) may include operation(s) of the TX UE to reserve/select/determine potential retransmission resource(s) in which actual use is determined based on SL HARQ feedback information received from RX UE(s).

Meanwhile, in various embodiments of the present disclosure, a sub-selection window may be replaced/substituted with a selection window and/or a pre-configured number of resource sets within the selection window, or vice versa.

Meanwhile, in various embodiments of the present disclosure, SL MODE 1 may refer to a resource allocation method or a communication method in which a base station directly schedules SL transmission resource(s) for a TX UE through pre-defined signaling (e.g., DCI or RRC message). For example, SL MODE 2 may refer to a resource allocation method or a communication method in which a UE independently selects SL transmission resource(s) in a resource pool pre-configured or configured from a base station or a network. For example, a UE performing SL communication based on SL MODE 1 may be referred to as a MODE 1 UE or MODE 1 TX UE, and a UE performing SL communication based on SL MODE 2 may be referred to as a MODE 2 UE or MODE 2 TX UE.

Meanwhile, in the present specification, for example, a dynamic grant (DG) may be replaced/substituted with a configured grant (CG) and/or a semi-persistent scheduling grant (SPS). For example, a DG may be replaced/substituted with a combination of a CG and a SPS grant. For example, a CG may include at least one of CG type 1 (configured grant type 1) and/or CG type 2 (configured grant type 2). For example, in CG type 1, a grant may be provided by RRC signaling and may be stored as a configured grant. For example, in CG type 2, a grant may be provided by a PDCCH, and may be stored or deleted as a grant configured based on L1 signaling indicating activation or deactivation of the grant. For example, in CG type 1, a base station may allocate a periodic resource to a transmitting UE through an RRC message. For example, in CG type 2, a base station may allocate a periodic resource to a transmitting UE through an RRC message, the base station may dynamically activate or deactivate the periodic resource through DCI.

Meanwhile, in various embodiments of the present disclosure, a channel may be replaced/substituted with a signal, or vice versa. For example, transmission/reception of a channel may include transmission/reception of a signal. For example, transmission/reception of a signal may include transmission/reception of a channel. For example, cast may be replaced/substituted with at least one of unicast, groupcast, and/or broadcast, or vice versa. For example, a cast type may be replaced/substituted with at least one of unicast, groupcast, and/or broadcast, or vice versa. For example, a cast or a cast type may include unicast, groupcast, and/or broadcast.

Meanwhile, in various embodiments of the present disclosure, a resource may be replaced/substituted with a slot or a symbol, or vice versa. For example, the resource may include a slot and/or a symbol.

Meanwhile, in various embodiments of the present disclosure, a priority may be replaced/substituted with at least one of logical channel prioritization (LCP), latency, reliability, minimum required communication range, prose per-packet priority (PPPP), sidelink radio bearer (SLRB), a QoS profile, a QoS parameter, and/or requirement, or vice versa.

Meanwhile, in various embodiments of the present disclosure, for example, for convenience of description, a (physical) channel used when a RX UE transmits at least one of the following information to a TX UE may be referred to as a PSFCH.

- SL HARQ feedback, SL CSI, SL (L1) RSRP

Meanwhile, when performing sidelink communication, a method for a transmitting UE to reserve or pre-determine transmission resource(s) for receiving UE(s) may be representatively as follows.

For example, the transmitting UE may perform a reservation of transmission resource(s) based on a chain. Specifically, for example, if the transmitting UE reserves K transmission resources, the transmitting UE may transmit location information for less than K transmission resources to receiving UE(s) through a SCI transmitted to the receiving UE(s) at any (or specific) transmission time or a time resource. That is, for example, the SCI may include location information for less than the K transmission resources. Alternatively, for example, if the transmitting UE reserves K transmission resources related to a specific TB, the transmitting UE may transmit location information for less than K transmission resources to receiving UE(s) through a SCI transmitted to the receiving UE(s) at any (or specific) transmission time or a time resource. That is, the SCI may include location information for less than the K transmission resources. In this case, for example, it is possible to prevent performance degradation due to an excessive increase in payloads of the SCI, by signaling only the location information for less than K transmission resources to the receiving UE(s) through one SCI transmitted at any (or specific) transmission time or the time resource by the transmitting UE.

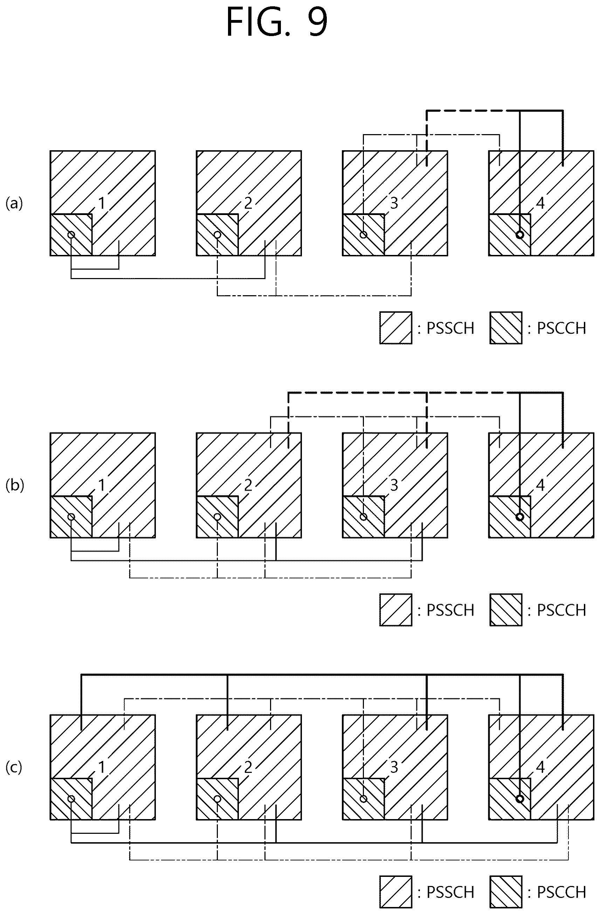

FIG. 9 shows a method in which a UE that has reserved transmission resource(s) informs another UE of the transmission resource(s), based on an embodiment of the present disclosure. The embodiment of FIG. 9 may be combined with various embodiments of the present disclosure.

Specifically, for example, (a) of FIG. 9 shows a method for performing by a transmitting UE chain-based resource reservation by transmitting/signaling location information of (maximum) 2 transmission resources to receiving UE(s) through one SCI, in the case of a value of K = 4. For example, (b) of FIG. 9 shows a method for performing by a transmitting UE chain-based resource reservation by transmitting/signaling location information of (maximum) 3 transmission resources to receiving UE(s) through one SCI, in the case of a value of K = 4. For example, referring to (a) and (b) of FIG. 9, the transmitting UE may transmit/signal only location information of the fourth transmission-related resource to the receiving UE(s) through the fourth (or last) transmission-related PSCCH. For example, referring to (a) of FIG. 9, the transmitting UE may transmit/signal to the receiving UE(s) not only location information of the fourth transmission-related resource but also location information of the third transmission-related resource additionally through the fourth (or last) transmission-related PSCCH. For example, referring to (b) of FIG. 9, the transmitting UE may transmit/signal to the receiving UE(s) not only location information of the fourth transmission-related resource but also location information of the second transmission-related resource and location information of the third transmission-related resource additionally through the fourth (or last) transmission-related PSCCH. In this case, for example, in (a) and (b) of FIG. 9, if the transmitting UE may transmit/signal to the receiving UE(s) only location information of the fourth transmission-related resource through the fourth (or last) transmission-related PSCCH, the transmitting UE may configure or designate a field/bit of location information of unused or remaining transmission resource(s) to a pre-configured value (e.g., 0). For example, in (a) and (b) of FIG. 9, if the transmitting UE may transmit/signal to the receiving UE(s) only location information of the fourth transmission-related resource through the fourth (or last) transmission-related PSCCH, the transmitting UE may be configured or designate a field/bit of location information of unused or remaining transmission resource(s) to a pre-configured status/bit value indicating/representing the last transmission (among 4 transmissions).

Meanwhile, for example, the transmitting UE may perform a reservation of transmission resource(s) based on a block. Specifically, for example, if the transmitting UE reserves K transmission resources, the transmitting UE may transmit location information for K transmission resources to receiving UE(s) through a SCI transmitted to the receiving UE(s) at any (or specific) transmission time or a time resource. That is, the SCI may include location information for K transmission resources. For example, if the transmitting UE reserves K transmission resources related to a specific TB, the transmitting UE may transmit location information for K transmission resources to receiving UE(s) through a SCI transmitted to the receiving UE(s) at any (or specific) transmission time or a time resource. That is, the SCI may include location information for K transmission resources. For example, (c) of FIG. 9 shows a method for performing by the transmitting UE block-based resource reservation, by signaling location information of 4 transmission resources to receiving UE(s) through one SCI, in the case of a value of K = 4.

For example, Table 9 describes features related to FR2 inter-UE communications (e.g., SL communications).

[Table 9]

| |
|---|
| 1. Specify mechanism to support NR sidelink CA operation based on LTE sidelink CA operation [RAN2, RAN1, RAN4] (This part of the work is put on hold until further checking in RAN#99)<br>    - Support only LTE sidelink CA features for NR (i.e., SL carrier (re-)selection, synchronization of aggregated carriers, handling the limited capability, power control for simultaneous sidelink transmission, packet duplication)<br>    - The work is limited to FR1 licensed spectrum and ITS band in FR1.<br>    - No specific enhancements of Rel-17 sidelink features with sidelink CA support.<br>    - This feature is backwards compatible in the following regards<br>        o A Rel-16/Rel-17 UE can receive Rel-18 sidelink broadcast/groupcast transmissions with CA for the carrier on which it receives PSCCH/PSSCH and transmits the corresponding sidelink HARQ feedback (when SL-HARQ is enabled in SCI)<br><br>2. Study and specify support of sidelink on unlicensed spectrum for both mode 1 and mode 2 where Uu operation for mode 1 is limited to licensed spectrum only [RAN1, RAN2, RAN4]<br>    - Channel access mechanisms from NR-U shall be reused for sidelink unlicensed operation<br>        o Assess the applicability of sidelink resource reservation from Rel-16/Rel-17 to sidelink unlicensed operation within the boundaries of unlicensed channel access mechanism and operation<br>            ■ No specific enhancements for Rel-17 resource allocation mechanisms<br>            ■ If the existing NR-U channel access framework does not support the required SL-U functionality, WGs will make appropriate recommendations for RAN approval.<br>    - Physical channel design framework: Required changes to NR sidelink physical channel structures and procedures to operate on unlicensed spectrum<br>        o The existing NR sidelink and NR-U channel structure shall be reused as the baseline.<br>    - No specific enhancements for existing NR SL feature<br>    - Focus on FR1 unlicensed bands (n46 and n96/n102).<br>    - Note: In sidelink unlicensed operation, the gNB does not perform Type 1 channel access to initiate and share a channel occupancy, neither Type 2 channel access to share an initiated channel occupancy, nor semi-static channel access procedures to access an unlicensed channel.<br><br>3. Study enhanced sidelink operation on FR2 licensed spectrum [RAN1, RAN2]<br>    - Focus only on updating the evaluation methodology for commercial deployment scenario in 4Q 2022. [RAN1]<br>        - Study is limited to the support of sidelink beam management (including initial beam-pairing, beam maintenance, and beam failure recovery, etc) by reusing existing sidelink CSI framework and reusing Uu beam management concepts wherever possible. [RAN1, RAN2]<br>        o Beam management in FR2 licensed spectrum considers sidelink unicast communication only.<br><br>4. Study and specify, if necessary, mechanism(s) for co-channel coexistence for LTE sidelink and NR sidelink including performance, necessity, feasibility, and potential specification impact if any [RAN1, RAN2, RAN4]<br>    - Reuse the in-device coexistence framework defined in Rel-16 as much as possible<br>    - Note, RAN1 continues the work on dynamic resource pool sharing based on existing agreements and WID with high priority for Type A devices and operating combination A<br><br>5. UE Tx and Rx RF requirement for supporting new features introduced in this WI, sidelink frequency bands for single-carrier operation and frequency band combinations for carrier aggregation operation [RAN4]<br>    - The exact frequency bands for both licensed and ITS-dedicated spectrum in FR1 and FR2 are to be determined based on company input during the WI.<br>    - The exact frequency band combinations for both FR1 licensed and ITS-dedicated spectrum are to be determined based on company input during the WI.<br>    - Frequency bands for the unlicensed spectrum in FR1 are [n46 and n96/n102] (i.e., 5GHz and 6GHz) in accordance with corresponding national regulatory requirements.<br>    - Support of new sidelink frequency bands and band combinations should ensure coexistence between sidelink and Uu interface in the same and adjacent channels in licensed spectrum.<br><br>6. UE RRM core requirement for the new features introduced in this WI [RAN4]<br>Rel-18 sidelink should be able to coexist with Rel-16/17 sidelink in the same resource pool. This does not preclude the possibility of operating Rel-18 sidelink in a dedicated resource pool. |

According to one embodiment of the present disclosure, technologies related to inter-UE (e.g., SL) beam management may be described.

For example, according to one embodiment of the present disclosure, a beam pairing operation may be provided.

For example, the beam pairing operation may be provided in the form of transmission beam sweeping/repetition.

According to one embodiment of the present disclosure (option 1), a specific field (BEAM_INFOFLD) in inter-UE control information (e.g., SCI) (and/or, a pre-configured indicator), whether the same transmission beams are being applied or different transmission beams are being applied to a transmission on a plurality of slots (BS_SLOTNUM) transmitted by a UE (and/or, whether a UE applies the same (or different) beams per time (and/or frequency) resource and/or applied beam (index) information) may be signaled.

For example, information signaled via BEAM_INFOFLD field (e.g., using reserved bits in first inter-UE control information (e.g., 1st SCI)) may include the following information.

- Information for whether the same transmission beam is applied to the current transmission (e.g., repeating the transmission beam) or not (e.g., sweeping the transmission beam) compared to the previous transmission.
- Index information for the transmission beam that applies to the current transport.
- Information for what number the slot where the current transmission is being performed is among BS_SLOTNUM.

For example, the (maximum) (allowable) number of BS_SLOTNUMs may be set per the information below. Alternatively, for example, the (maximum) (allowable) number of BS_SLOTNUMs may be set via inter-UE communication (e.g., SL communication) capability signaling (e.g., PC5 RRC).

- carrier (frequency) (or, resource pool)
- Quality of Service (e.g., QoS) profile (or, radio bearer/logical channel)
- A pair of source/destination IDs

For example, the message used for transmission for such purposes may be limited to transmission of pre-configured resource block (e.g., RB)/logical channel (e.g., LCH) related messages (e.g., direct communication request (e.g., DCR), direct communication acknowledgment (e.g., DCA)).

According to one embodiment of the present disclosure (option 2), a separate resource may be configured on which a transmission related to transmission beam sweeping/repeating (reference signal (e.g., RS)) is performed.

For example, a separated pool (e.g., which can be interpreted as a dedicated pool) may be configured.

For example, resource location information where transmission beam sweeping/repeating operation on a separate pool is performed may be implicitly derived based on the location of the transmission resource on a communication pool, or may be directly signaled by a transmission on a communication pool. For example, the communication pool may be interpreted as a pool that is shared with legacy UEs.

For example, an indicator of whether or not to perform transmission beam sweeping or beam repetition may be included in a transmission on a communication pool, at least.

For example, the (maximum) (allowed) number of beam sweeps or beam repetitions may be set similarly to option 1.

According to one embodiment of the present disclosure, a form where a resource used for a beam sweeping/repeating operation is configured in the remaining regions after excluding symbols (e.g., inter-UE communication (e.g., SL communication) symbols (including inter-UE physical feedback channel (e.g., PSFCH) symbols) from a slot may be provided.

According to one embodiment of the present disclosure (option 3), a new form of slot structure may be introduced.

For example, a plurality of inter-UE channel state information reference signal (e.g., SL CSI-RS) symbols may exist in the region of an inter-UE physical control channel (e.g., PSCCH) and an inter-UE physical shared channel (e.g., PSSCH) scheduled by the inter-UE physical control channel (e.g., PSCCH).

For example, an antenna switching gap may be required between inter-UE channel state information reference signal (e.g., SL CSI-RS) symbols (or between an inter-UE channel state information reference signal (e.g., SL CSI-RS) symbol and a demodulation reference signal (e.g., DMRS) symbols, or between inter-UE channel state information reference signal (e.g., SL CSI-RS) symbols and inter-UE physical control channel (e.g., PSCCH) symbols).

For example, second inter-UE control information (e.g., 2nd SCI) to which different transmission beams are applied may not be mapped on the same symbol as the inter-UE channel state information reference signal (e.g., SL CSI-RS).

For example, a demodulated reference signal (e.g., DMRS) symbol used for a sensing operation may need to exist on the region of an inter-UE physical shared channel (e.g., PSSCH).

For example, if each of the frequency resource regions occupied by an inter-UE physical channel (e.g., PSCCH/PSSCH) and a beam operation-related reference signal are different, the power spectral density (e.g., PSD) value per resource element (e.g., RE) of the reference signal may be set to be the same as that of an inter-UE physical channel (e.g., PSCCH/PSSCH), or the power spectral density (e.g., PSD) value per resource element (e.g., RE) of the corresponding reference signal may be different from that of the corresponding inter-UE physical channel (e.g., PSCCH/PSSCH), here, a gap between a symbol of the inter-UE physical channel (e.g., PSCCH/PSSCH) and a symbol of a reference signal may be set (considering a transient period).

According to one embodiment of the present disclosure, an embodiment related to a beam sweeping/repeating related transmission form may be provided.

For example, a beam sweeping/repeating related transmission form may be linked to source ID information.

For example, a beam sweeping/repeating related transmission form may be linked to source ID and destination ID information.

For example, a time region (RQ_WIN) during which a beam sweeping/repeating related transmission is performed, or a time region (RP_WIN) during which information related to a selected transmission beam is received, may be pre-configured (between UEs) (e.g., via an exchange of PC5 radio resource control (e.g., RRC) signaling).

For example, a form of transmission related to beam sweeping/repeating may be used for a beam failure recovery (e.g., BFR) procedure.

For example, if the number of transmission beams is different for each transmitting UE, a transmitting UE-specific selected transmission beam-related information transmission region may be derived (e.g., based on the last transmission beam position) from the perspective of a receiving UE.

According to one embodiment of the present disclosure, a method for configuring a relationship between an RQ_WIN and an RP_WIN may be provided.

For example, transmissions related to beam sweeping/repeating may be configured to have a relatively higher priority than other transmissions so that their omission is avoided.

For example, beam sweeping/repeating may be performed upon transmission of a direct communication request (e.g., DCR) (or a PC5 radio resource control (e.g., RRC) reconfiguration message), and selected transmission beam information may be fed back upon transmission of a direct communication acknowledgment (e.g., DCA) (or a reconfiguration successful/failure message).

For example, the relevant information may be included in a direct communication acknowledgment (e.g., DCA) message, or the relevant information may be known through an additional MAC control element (e.g., MAC CE).

For example, when different transmission beams are applied between data indicated by inter-UE control information (e.g., SCI), a minimum gap between them is required, which may be related to UE capability.

For example, on the same slot, inter-UE control information (e.g., SCI) and data may always be transmitted on the same transport beam.

For example, the beam information used for inter-UE control information (e.g., SCI) and/or data in the current slot may be signaled via inter-UE control information (e.g., SCI) in the previous slot (e.g., whether the corresponding control information was successfully received may be fed back). Alternatively, for example, after the applied beam change indicator is received, the beam information that is applied at a later time point may be signaled (after transmission of feedback by the UE capability-based offset).

For example, before UE capability information is exchanged, the largest candidate offset value may be applied.

For example, after performing beam pairing, a random selection may be performed from a pre-configured dedicated pool. For example, inter-UE control information (e.g., SCI) (and/or inter-UE physical control channel (e.g., PSCCH)) transmission (and/or reception) may be configured via an omni-beam (and/or a form to which no directional beamforming is applied, of the direction of transmission) (and/or a repeated form based on beam (sweeping/repeating)), and a (inter-UE physical shared channel (e.g., PSSCH)) resource selection may be performed through a sensing procedure based on the inter-UE control information (e.g., SCI) (and/or inter-UE physical control channel (e.g., PSCCH)) decoding (and/or, related reference signal measuring). Here, for example, a beamforming (a directional beamforming, of the direction of the transmission) of the linked inter-UE physical shared channel (e.g., PSSCH) transmission direction may be applied.

For example, if the inter-UE synchronization signal block (e.g., SL SSB) (measurement) based beam pairing operation is performed, the problem of inter-UE synchronization signal block (e.g., SL SSB) transmission resource conflicts that are used between different UEs may be alleviated by applying a sensing operation when selecting an inter-UE synchronization signal block (e.g., SL SSB) transmission resource.

According to one embodiment of the present disclosure, when beam information (and/or related frequency/time resource location information) applied to an inter-UE communication channel (e.g., SL channel)/signal transmission is to be delivered to a counterpart UE (e.g., to assist in selecting/determining a reception beam to be applied), the location information to which the same (or different) transmission beam is applied may additionally be delivered when signaling such information.

For example, inter-UE control information (e.g., SCI) may be configured to be transmitted only in omni-beam form (and/or no directional beamforming applied).

For example, in an inter-UE coordination (e.g., IUC)-based operation, a UE A (e.g., a receiving UE) may coordinate the transmission beam to be used between itself and a different UE B (e.g., a transmitting UE). Here, for example, UE A may signal to UE B, as a non-preferred resource, resource information to which UE A is not able to apply the reception beam used to receive packets from UE B. Alternatively, for example, if UE B has reserved/selected such a problematic resource as a transmission resource, UE A may trigger (via transmission of an inter-UE coordination (e.g., IUC) indicator) a reselection of the transmission resource.

Here, for example, if a plurality of UE Bs using different transmission beams have selected/reserved a frequency division multiplexed (e.g., FDMed) transmission resource, UE A may cause (via transmission of an inter-UE coordination (e.g., IUC) indicator) (related to transmission of a relatively low priority packet) (some of) UE Bs to trigger a reselection of the transmission resource. For example, the operation may be performed in the form of causing the UE B to select a time division multiplexed (e.g., TDMed) resource.

According to one embodiment of the present disclosure, UE A may define a discovery pool (e.g., a dedicated pool) and perform inter-UE control information (e.g., SCI)) transmission using only omni-beam in the discovery pool, and switch to a real data communication pool (e.g., a shared pool) to perform inter-UE physical shared channel (e.g., PSSCH)) transmission using only directional beamforming.

According to one embodiment of the present disclosure, a receiving UE may always apply omni-beam (and/or on a pre-configured time/frequency resource) for the reception of a pre-configured message (e.g., inter-UE control information (e.g., SCI)).

According to one embodiment of the present disclosure, a reference signal to be used for measurement for transmission beam selection (e.g., measurement of a reference signal used for L1 reference signal received power (e.g., RSRP), hypothetical block error rate (e.g., BLER)) is proposed.

(Option 1) inter-UE channel state information reference signal (e.g., SL CSI-RS)

For example, a new second inter-UE control information (e.g., 2nd SCI) format may be used in measurement for transmission beam selection.

Alternatively, for example, an existing second inter-UE control information (e.g., 2nd SCI) format may be used in the measurement for transmission beam selection.

In this case, for example, a value of the inter-UE channel state information reporting request field (e.g., SL CSI reporting request field) may be designated as 1, and using reserved bits in first inter-UE control information (e.g., 1st SCI), it may be provided that the linked inter-UE channel state information reference signal (e.g., SL CSI-RS) is for transmission beam measurement.

(Option 2) Inter-UE demodulated reference signal (e.g., SL DMRS)

For example, an inter-UE physical shared channel demodulation reference signal (e.g., PSSCH DMRS) or an inter-UE physical control channel demodulation reference signal (e.g., PSCCH DMRS) may be used in measurement for transmission beam selection.

(Option 3) Inter-UE synchronization signal block (e.g., SL SSB)

For example, sub-synchronization signals (e.g., SSS) and inter-UE physical broadcast channel demodulation reference signals (e.g., PSBCH DMRS) may be used in measurement for transmission beam selection.

(Option 4) Inter-UE physical feedback channel (e.g., PSFCH)

For example, measurement results for an inter-UE physical feedback channel (e.g., PSFCH) may be used in measurement for transmission beam selection.

For example, when a broadcast (e.g., BC) message, such as a direct communication request (e.g., DCR), is transmitted, a problem may arise where a transmitting UE is unable to identify release information linked to a target UE or related service, or capability information related to beam management. To address the above problem, for example, a transmitting UE may perform transmissions with beam management applied and transmissions without beam management applied (separately and/or both of them).

According to one embodiment of the present disclosure, an embodiment of selected transmission beam feedback configuration information may be provided.

(Option 1) The beam index information (or, resource location information) related to (one or a pre-configured number (up to the maximum number) of) transmission beams satisfying the following conditions may be included in beam feedback configuration information.

For example, a transmission beam with an L1- reference signal received power (e.g., RSRP) measurement value (or a hypothetical block error rate (e.g., BLER) value less than or equal to a pre-configured threshold level) greater than or equal to a threshold level. Here, for example, if no transmission beam satisfying this condition exists, a separate indicator informing such a condition may be fed back, information related to a transmission beam satisfying the condition described below may be fed back, a beam failure recovery (e.g., BFR) procedure may be triggered, or an inter-UE radio link failure (e.g., SL RLF) may be declared.

For example, the transmission beam with the highest (or, the top M, wherein the M is pre-configured) L1-referenced signal received power (e.g., RSRP) measurement values (or, the lowest (or, the bottom M, wherein the M is pre-configured) hypothetical block error rate (e.g., BLER) values). For example, if there is a plurality of transmission beams satisfying this condition, a UE may select one or a plurality of pre-configured number of (up to a maximum number of) transmission beams by a UE implementation.

For example, a beam failure recovery (e.g., BFR) procedure may be triggered by a higher layer. For example, an AS layer may report beam-related quality information to a higher layer.

For example, since determination of a beam's direction is possible, an (optimal) beam selected based on its phase. Here, for example, the phase-based beam determination/selection may be limited to be applied only in a fine beam tuning procedure. For example, the fine beam tuning procedure may be supported by feeding back a phase offset value, relative to a reference beam.

(Option 2) A measurement value (e.g., L1 reference signal received power (e.g., RSRP), hypothetical block error rate (e.g., BLER)) related to a transmission beam selected based on Option 1 may be included in beam feedback configuration information.

For example, a receiving UE may determine the final beam to use with a transmitting UE.

Alternatively, for example, a transmitting UE may determine the final beam to use with a receiving UE.

Alternatively, for example, a receiving UE (or a transmitting UE) may deliver candidates to a transmitting UE (or a receiving UE), and the transmitting UE may determine a final beam from among the candidates.

Here, for example, a transmitting UE (or a receiving UE) may be defined as an entity (and/or an entity that has triggered/initiated a PC5 radio resource control (e.g., RRC) connection, and/or an entity that will perform a packet transmission operation) that has performed a specific pre-configured message transmission (e.g., direct communication request (e.g., DCR), discovery, PC5 radio resource control (e.g., RRC) signaling).

According to one embodiment of the present disclosure, an embodiment related to a container that includes selected transmission beam feedback may be provided.

(Option 1) MAC control element (e.g., MAC CE)

For example, additional assistance information may be transmitted via it in addition to information delivered via an inter-UE physical feedback channel (e.g., PSFCH).

    (Option 2) New second inter-UE control information (e.g., 2nd SCI) format
    (Option 3) inter-UE physical feedback channel (e.g., PSFCH)

For example, it may be fed back only on an inter-UE physical feedback channel (e.g., PSFCH) resource related to an inter-UE control information (e.g., SCI) (or inter-UE channel state information reference signaling (e.g., SL CSI-RS)).

According to one embodiment of the present disclosure, a method for handling reconfiguration failure when a beam pairing procedure is being performed via PC5 radio resource control (e.g., RRC) signaling may be provided.

(Option 1) beam pairing reconfiguration failure cause information may be defined in a complete message.

According to one embodiment of the present disclosure, an embodiment related to beam maintenance and failure recovery may be provided.

According to one embodiment of the present disclosure, conditions under which a UE performs a transmission beam sweeping/repeating operation (or, a beam failure recovery (e.g., BFR) procedure) or is permitted to perform a transmission beam sweeping/repeating operation (or, a beam failure recovery (e.g., BFR) procedure) may be provided.

(Option 1) Perform transmission beam sweeping/repeating operation based on a pre-configured interval.

For example, the number of transmission beams swept/repeated by a transmitting UE may be gradually increased (in the time domain).

(Option 2) Perform the transmission beam sweeping/repeating operation when the below pre-configured/defined conditions are met.

For example, a transmission beam sweeping/repeating operation may be performed if a UE receives NACKs (consecutively) from a peer UE more than a pre-configured threshold number of times (or if a discontinuous transmission (e.g., DTX) occurs) (and/or if the reported beam-related quality from the peer UE is less than or equal to a pre-configured threshold level).

For example, a transmission beam sweeping/repeating operation may be performed if the (consecutively) reported (L1 or L3) reference signal received power (e.g., RSRP)/hypothetical block error rate (e.g., BLER) measurements or inter-UE channel state information (e.g., SL CSI) values from a peer UE do not satisfy a pre-configured threshold level.

For example, a transmission beam sweeping/repeating operation may be performed when a transmit resource reselection is triggered/changed.

For example, a transmission beam sweeping/repeating operation may be performed when information related to a resource pool (or, inter-UE bandwidth part (e.g., SL BWP), inter-UE communication (e.g., SL communication)/congestion level control parameters, inter-UE communication mode type (e.g., SL mode type), inter-UE logical channel (e.g., SL LCH)/inter-UE radio bearer (e.g., SL radio bearer)/inter-UE communication quality of service profile (e.g., SL QoS profile), inter-UE discontinuous reception (e.g., SL DRX) operation, or beam failure indication (e.g., beam failure indication (BFI))/beam failure recovery (e.g., BFR) parameters) has been reconfigured/changed.

For example, a transmission beam sweeping/repeating operation may be performed when transmission (and/or reception) pool switching (or switching between normal and exceptional pools) occurs.

For example, a transmission beam sweeping/repeating operation may be performed when an inter-UE radio link failure (e.g., SL RLF) (or MAC reset) occurs.

For example, a transmission beam sweeping/repeating operation may be performed if a transmission beam needs to be changed due to the addition/removal of a unicast link.

(Option 3) Perform transmission beam sweeping/repeating operation when requested by another UE (e.g., a peer UE)

For example, a transmission beam sweeping/repeating operation may be performed when the peer UE's beam failure recovery (e.g., BFR) procedure is triggered (by a pre-configured condition being met).

For example, a transmission beam sweeping/repeating operation may be performed if a peer UE fails data decoding (consecutively) more than a pre-configured threshold number of times (e.g., during a blind retransmission operation) (or if a reference signal received power (e.g., RSRP)/hypothetical block error rate (e.g., BLER) measurement does not satisfy a pre-configured threshold level, or if a reception beam needs to be changed due to the addition of a unicast link).

For example, a retransmission of a reference signal related to beam sweeping/repeating (and/or beam quality measurement) may be requested from a peer UE via pre-configured signaling (e.g., inter-UE control information (e.g., SCI), MAC control element (e.g., MAC CE)).

According to one embodiment of the present disclosure, a method of feedback of relevant information may be provided when a beam failure recovery (e.g., BFR) procedure is triggered.

(Option 1) a feedback resource linked per candidate transmission beam is configured

For example, an inter-UE physical feedback channel (e.g., PSFCH) resource (and/or time/frequency resource) (separately configured) per transmission beam index may be linked, or a feedback resource per transmission beam index in a separately configured resource pool may be linked.

(Option 2) Separate beam pair(s) (PRI_BEAMPAIR) is designated and managed for feedback for the corresponding purpose

For example, a beam failure recovery (e.g., BFR) procedure may be triggered based on the remaining transmission beams except PRI_BEAMPAIR.

According to one embodiment of the present disclosure, for base station-UE communication (e.g., Uu communication), a hypothetical block error rate (e.g., BLER) may be used only in the case of periodic channel state information reference signaling (e.g., periodic CSI-RS) (and, L3 filtering).

According to one embodiment of the present disclosure, when a pre-configured number (e.g., BEAM_FAILURE_INSTANCE_MAX_COUNT) of beam failure indications (e.g., BFIs) occur, a receiving UE may inform a transmitting UE that this has occurred, and trigger a beam sweeping/repeating operation of a transmitting UE.

According to one embodiment of the present disclosure, when a beam failure recovery (e.g., BFR) procedure is triggered, a receiving UE may perform feedback via a pre-configured resource (with a transmitting UE). For example, the above operation may be interpreted as a kind of an event triggering based transmission beam sweeping/repeating operation. Here, for example, upon feedback, the related transmit power may be ramped, for example.

According to one embodiment of the present disclosure, for a plurality of unicast links, a transmitting UE may perform a transmission beam sweeping/repeating operation based on a common source/destination ID.

For example, the related ID information may be exchanged via each of the unicast related PC5 radio resource control (e.g., RRC) signaling.

For example, the above embodiments may be for a case where multiple unicast sessions are operated between physically identical UEs.

According to one embodiment of the present disclosure, a report for a reference signal received power (e.g., RSRP) measurement value for a candidate transmission beam (e.g., a candidate transmission beam for the purpose of switching to a different transmission beam due to a problem with a conventional transmission beam) may be dynamically indicated via a field in inter-UE control information (e.g., SCI).

For example, the above indication may be performed in (semi-)periodic and/or aperiodic reference signal received power (e.g., RSRP) report form.

For example, if a beam failure recovery (e.g., BFR) procedure is triggered at any one of the unicast-related UEs, it may be assumed that a beam failure recovery (e.g., BFR) operation is triggered at the peer UE (and/or the other UE may also perform a beam failure recovery (e.g., BFR) operation).

According to one embodiment of the present disclosure, a method of reducing interruption of inter-UE communication (e.g., SL communication) caused by a beam failure recovery (e.g., BFR) procedure may be provided.

(Option 1) Beam failure indication (e.g., BFI) counting is performed per transmission beam (subgroup)

For example, a beam failure recovery (e.g., BFR) procedure may be performed specifically for a transmission beam (subgroup).

(Option 2) Addition/removal of transmission beams (and/or triggering of beam sweeping/repeating related operations) is allowed even if the beam failure recovery (e.g., BFR) procedure is not triggered (e.g., if a pre-configured condition (e.g., a case where the beam quality is degraded to less than or equal to a threshold level) is met).

For example, when transmission beam addition/removal occurs, the existing BEAM_FAILURE_DETECTION timer/beam failure indication (e.g., BFI) counter value may be reset (or kept).

For example, when a beam failure recovery (e.g., BFR) operation occurs/is performed (and/or if the newly selected beam is not covered by an existing beam-related spatial filter), a discontinuous transmission (e.g., DTX) counter value related to an inter-UE radio link failure (e.g., SL RLF) may be reset (or kept), or a MAC reset operation may be performed (or not performed).

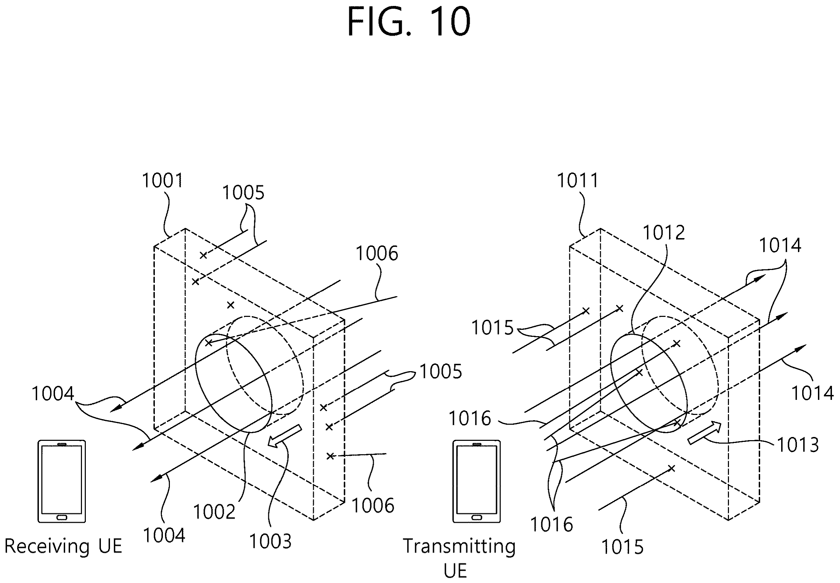

FIG. 10 shows a transmission spatial filter and a reception spatial filter, according to one embodiment of the present disclosure. The embodiment of FIG. 10 may be combined with various embodiments of the present disclosure.

Referring to FIG. 10, a reception spatial filter 1001 used by a receiving UE for reception operation and a transmission spatial filter 1011 used by a transmitting UE for transmission operation are shown.

For example, a reception spatial filter may only pass signals with the same beam direction as 1003. That is, the receiving UE may only receive a transmission performed based on a beam with the direction of 1003.

Thus, transmissions of 1006 transmitted based on a beam with a different beam direction than the beam direction of 1003 may not pass the reception spatial filter. 1004 is a signal transmitted based on a beam with the same beam direction as 1003, which may pass the reception spatial filter and be received by a receiving UE.

For example, a reception spatial filter may have a beam size/width of 1002 and may only pass signals that are performed based on a beam that is included within the beam size/width. That is, a receiving UE may only receive transmissions that are performed based on a beam with a size/width that is included within the beam size/width of 1002.

Thus, transmissions of 1005 that contacted the reception spatial filter outside of the size/width of 1002 may not pass the reception spatial filter among signal components transmitted based on a beam of a size/width greater than the size/width of 1002. Since 1004 has contacted the reception spatial filter in a region included in the size/width of 1002, it may pass through the reception spatial filter and be received by a receiving UE. On the other hand, 1005 has contacted the reception spatial filter outside of the size/width of 1002, and therefore cannot pass the reception spatial filter and cannot be received by the receiving UE.

For example, 1004 may be received by the receiving UE since its direction is the same as the direction of the beam 1003 through which the reception spatial filter passes, and since it contacts the reception spatial filter in a range that is included in the size/width of 1002. Here, for example, if the transmissions of 1004 are all of the transmitted components based on a specific beam (i.e., all of the signal components transmitted along with 1004 are successfully received by the receiving UE), then the reception spatial filter may be a spatial filter that covers the transmission spatial filter related to the specific beam.

For example, a transmission spatial filter may only pass signals that are the same as the beam direction of 1013. In other words, when a transmission UE performs a transmission operation based on the transmission spatial filter, the signal components 1014 that pass through the transmission spatial filter and are finally transmitted may all have the direction of 1013.

Thus, transmissions of 1016 transmitted based on a beam that is different from the beam direction of 1013 may not pass through the transmission spatial filter. Signal components 1014 with the same beam direction as 1013 may pass through the transmission spatial filter and be transmitted to a receiving UE.

For example, a transmission spatial filter may have a beam size/width of 1012, and may only pass signal components that are included within the beam size/width. That is, when a transmission UE performs a transmission operation based on the transmission spatial filter, only signal components that are included within the beam size/width of 1012 may be passed through the transmission spatial filter and finally transmitted.

Thus, signal components that are not included in the size/width of 1012 may not pass through the transmission spatial filter. Since 1014 are signal components that are included in the size/width of 1012, they may pass through the transmission spatial filter and be transmitted to a receiving UE. On the other hand, 1015 are signal components that are not included in the size/width of 1012 and therefore cannot pass through the transmission spatial filter and be transmitted to the receiving UE.

For example, the direction of 1014 is the same as the beam direction 1013 through which the transmission spatial filter passes, and the signal components included in the size/width of 1012, it may be transmitted to a receiving UE. Here, for example, if the transmissions of 1014 all pass through a reception spatial filter used by a receiving UE for receive operation (i.e., if the direction of the signal components of 1014 is the same as the beam direction related to the reception spatial filter, and the signal components of 1014 are all included in the size/width of the reception spatial filter), then the reception spatial filter may be a spatial filter that covers the transmission spatial filter of 1011.

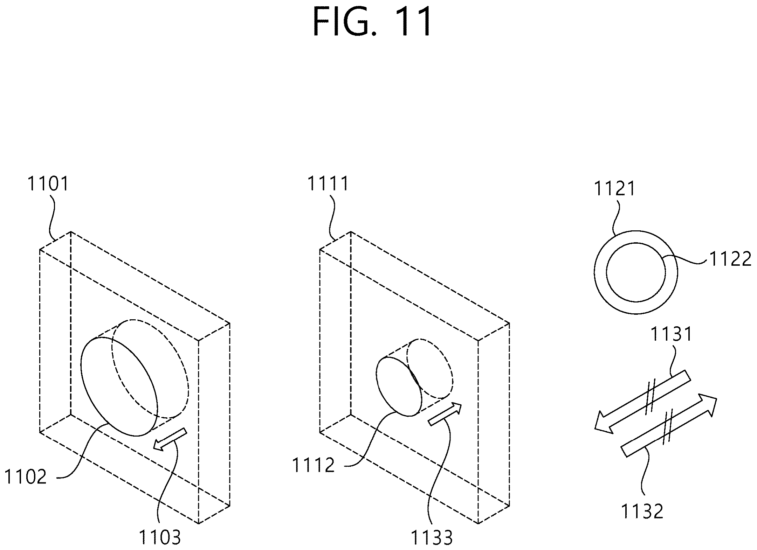

FIG. 11 shows a method for determining whether a reception spatial filter covers a transmission spatial filter, according to one embodiment of the present disclosure. The embodiment of FIG. 11 may be combined with various embodiments of the present disclosure.

Referring to FIG. 11, a reception spatial filter 1101 used by a receiving UE for a reception operation and a transmission spatial filter 1111 used by a transmitting UE for a transmission operation are shown.

For example, the direction of the signal components passed by the reception spatial filter may be 1103, and the direction of the signal components transmitted through the transmission spatial filter may be 1113. For example, the reception beam direction related to the reception spatial filter may be 1103, and the transmission beam direction related to the transmission spatial filter may be 1113.

For example, the size/width of the reception filter may be 1102. That is, the reception spatial filter passes only those signal components included in the 1102, and only those signal components that pass through the reception spatial filter may be received by a receiving UE.

For example, the size/width of the transmission spatial filter may be 1112. That is, the transmission spatial filter passes only those signal components included in the 1112, and only those signal components that pass through the transmission spatial filter may be transmitted to a receiving UE.

1121 and 1122 are cross sections of the size/width of a transmission spatial filter or the size/width of a reception spatial filter.

For example, if the 1121 is the size/width of a transmission spatial filter, the 1122 is the size/width of a reception spatial filter, and since the 1122 is included in the 1121, the size/width of the transmission spatial filter is larger than the size/width of the reception spatial filter, some of the signal components that pass through the transmission spatial filter and are transmitted to a receiving UE may not pass through the reception spatial filter. In this case, the reception spatial filter may be a spatial filter that does not cover the transmission spatial filter.

Conversely, for example, if the 1121 is the size/width of a reception spatial filter, the 1122 is the size/width of a transmission spatial filter, and since the 1122 is included in the 1121, the size/width of the transmission spatial filter is smaller than the size/width of the reception spatial filter, all of the signal components transmitted through the transmission spatial filter to a receiving UE may pass through the reception spatial filter. In this case, the reception spatial filter may be a spatial filter that covers the transmission spatial filter.

1131 represents 1103, i.e., the reception beam direction related to the reception spatial filter, and 1132 represents 1113, i.e., the transmission beam direction related to the transmission spatial filter. For example, as shown in the figure, since only when 1131 and 1132 are horizontal may all signal components transmitted by a transmitting UE based on the transmitting spatial filter pass through a receiving spatial filter, the receiving spatial filter may be said to be a spatial filter that covers the transmitting spatial filter when all signal components transmitted by the transmitting UE based on the transmitting spatial filter pass through the receiving spatial filter only when 1131 and 1132 are horizontal.

According to one embodiment of the present disclosure, the following parameters among parameters related to beam failure indication (e.g., BFI) or beam failure recovery (e.g., BFR) may be configured independently per quality of service (e.g., QoS) requirement (or, per logical channel (e.g., LCH), wireless bearer, (L2) source/destination ID pair, or unicast link)

For example, the parameters below may be finally selected from a set of pool-specific selectable candidates after they are provided, wherein the final selection may be performed based on negotiation between UEs, service-related quality of service (e.g., QoS) requirements (e.g., priority, reliability, delay, etc.), at least one of index, direction, and/or quality of) a beam, a quality related to an inter-UE communication session (e.g., SL session) (e.g., reference signal received power (e.g., RSRP), RSRQ, signal-to-noise ratio (e.g., SINR), inter-UE channel state information (e.g., SL CSI), etc.).

BEAM_FAILURE_DETECTION TIMER

BEAM_FAILURE_INSTANCE_MAX_COUNT
BEAM_FAILURE_RECOVERY_TIMER
RSRP_THRESHOLD_BFR
TANS_MAX_BFR

According to one embodiment of the present disclosure, a beam-based inter-UE physical feedback channel (e.g., PSFCH) transmit/receive operation method may be provided.

According to one embodiment of the present disclosure, an inter-UE physical feedback channel (e.g., PSFCH) transmission/reception prioritization method may be provided

According to one embodiment of the present disclosure, a method for handling a case where a plurality of inter-UE physical feedback channel (e.g., PSFCH) transmissions/transmissions, inter-UE physical feedback channel (e.g., PSFCH) transmissions/receptions, or inter-UE physical feedback channel (e.g., PSFCH) receptions/receptions based on different beams are overlapped may be provided.

(Option 1) After applying the Rel-16/17 inter-UE physical feedback channel (e.g., PSFCH) prioritization rules, the operation is as shown below for the remaining plurality of inter-UE physical feedback channel (e.g., PSFCH) transmissions or inter-UE physical feedback channel (e.g., PSFCH) receptions.

For example, after applying the Rel-16/17 inter-UE physical feedback channel (e.g., PSFCH) prioritization comparison rule, among the remaining plurality of inter-UE physical feedback channel (e.g., PSFCH) transmissions or inter-UE physical feedback channel (e.g., PSFCH) receptions, only the inter-UE physical feedback channel (e.g., PSFCH) transmission or inter-UE physical feedback channel (e.g., PSFCH) reception that is covered by a transmission beam (or receive beam) related to an inter-UE physical feedback channel (e.g., PSFCH) transmission or inter-UE physical feedback channel (e.g., PSFCH) reception with the highest priority may be performed.

Alternatively, for example, after applying the Rel-16/17 inter-UE physical feedback channel (e.g., PSFCH) prioritization rule, among the remaining plurality of inter-UE physical feedback channel (e.g., PSFCH) transmissions or inter-UE physical feedback channel (e.g., PSFCH) receptions, all of the remaining plurality of inter-UE physical feedback channel (e.g., PSFCH) transmissions or inter-UE physical feedback channel (e.g., PSFCH) receptions may be performed based on a transmission beam (or, receive beam) related to the transmission of inter-UE physical feedback channel (e.g., PSFCH) transmissions or receptions with the highest priority.

Alternatively, for example, by generating a transmission beam (or receive beam) that covers a transmission beam (or receive beam) related to the remaining plurality of inter-UE physical feedback channel (e.g., PSFCH) transmissions or inter-UE physical feedback channel (e.g., PSFCH) receptions, a UE may cause a transmit or receive operation to be performed thereon.

For example, when a transmitting UE has transmitted a plurality of inter-UE physical channels (e.g., PSSCH and/or PSCCH), each using a different beam for a plurality of target UEs, the reception operation of the inter-UE physical feedback channel (e.g., PSFCH) may need to be discussed.

For example, in the above case, for reception of an inter-UE physical feedback channel (e.g., PSFCH), a dynamic indicator (e.g., inter-UE control information (e.g., SCI), MAC control element (e.g., MAC CE)) of the location (and/or beamform used for transmission of the inter-UE physical feedback channel (e.g., PSFCH)) of the inter-UE physical feedback channel (e.g., PSFCH) resource may be introduced. Here, the inter-UE physical feedback channel (e.g., PSFCH) resource used for this purpose may be separated and configured (in time and/or frequency resource domain) from (or configured separately from) the existing inter-UE physical feedback channel (e.g., PSFCH) resource.

Here, for example, a transmitting UE may consider in selecting/scheduling the related transmission resources such that different beam-based inter-UE physical channel (e.g., PSSCH and/or PSCCH) transmissions are not performed over the inter-UE physical shared channel (e.g., PSSCH) slot(s) linked to an inter-UE physical feedback channel (e.g., PSFCH) occasion. Specifically, for example, when a beam#A based inter-UE physical channel (e.g., PSSCH and/or PSCCH) transmission is performed on an inter-UE physical shared channel (e.g., PSSCH) slot(s) linked to an inter-UE physical feedback channel (e.g., PSFCH) occasion (and/or when beam#A based transmission resource is selected/reserved), a transmitting UE may cause a beam#B, which is not covered by a beam#A related spatial filter, based transmission resource to be selected/reserved by avoiding the corresponding inter-UE physical shared channel (e.g., PSSCH) slot(s).

(Option 2) Apply the Rel-16/17 inter-UE physical feedback channel (e.g., PSFCH) prioritization rule only for inter-UE physical feedback channel (e.g., PSFCH) transmissions or inter-UE physical feedback channel (e.g., PSFCH) receptions that can be covered by the transmission beam (or, receive beam) related to the highest priority inter-UE physical feedback channel (e.g., PSFCH) transmission or inter-UE physical feedback channel (e.g., PSFCH) reception.

For example, if inter-UE physical feedback channel (e.g., PSFCH) transmissions (or, receptions) belonging to different beams have the same priority, the beam to be used may be selected by the UE implementation, or may be determined based on the number of inter-UE physical feedback channel (e.g., PSFCH) transmissions (or, receptions) belonging to a beam (for which that beam is used).

(Option 3) When overlap with inter-UE physical feedback channel (e.g., PSFCH) transmission or inter-UE physical feedback channel (e.g., PSFCH) reception related to groupcast (according to existing technology) or unicast (according to existing technology) occurs, perform inter-UE physical feedback channel (e.g., PSFCH) transmission or inter-UE physical feedback channel (e.g., PSFCH) reception without applying Rel-18 beam management schemes and applying Rel-16/17 prioritization rule, apply Option 1 (and/or Option 2), and/or (always) perform an inter-UE physical feedback channel (e.g., PSFCH) transmission or inter-UE physical feedback channel (e.g., PSFCH) reception related to groupcast (according to existing technology) or unicast (according to existing technology) regardless of whether the beam applied to the transmission (and/or reception) is covered, while applying Option 1 (and/or Option 2).

For example, via pre-configured signaling, such as inter-UE control information (e.g., SCI), etc., that the corresponding inter-UE physical shared channel (e.g., PSSCH) transmission is an inter-UE physical control channel (e.g., PSCCH) (and/or, an inter-UE physical shared channel (e.g., PSSCH)) to which Rel-18 beam management does not apply, and an inter-UE physical feedback channel (e.g., PSFCH) transmission is required.

For example, when inter-UE physical feedback channel (e.g., PSFCH) transmission (and/or, inter-UE physical feedback channel (e.g., PSFCH) reception) according to prior art and Rel-18 beam-based inter-UE physical feedback channel (e.g., PSFCH) transmissions (and/or inter-UE physical feedback channel (e.g., PSFCH) receptions) are overlapped, whether a beam-related operation is applied (e.g., whether omni-beam is applied, whether directional beam (and/or beamforming) is applied) may be configured.

According to one embodiment of the present disclosure, when the selected transmission beam information is informed via inter-UE physical feedback channel (e.g., PSFCH), the priority of the corresponding inter-UE physical feedback channel (e.g., PSFCH) may be configured to be relatively higher (than the priority of the general data-related inter-UE physical feedback channel (e.g., PSFCH)).

According to one embodiment of the present disclosure, by repeatedly transmitting an indicator (e.g., MAC control element (e.g., MAC CE)) reporting the triggering status of a beam failure recovery (e.g., BFR) procedure, the probability that a transmitting UE successfully receives it may be increased.

For example, the repetitive operation may be performed only if the related inter-UE physical feedback channel (e.g., PSFCH) transmission is omitted.

For example, via inter-UE control information (e.g., SCI) or the like, whether the repetitive operation is performed may be indicated.

For example, a timing relationship between an inter-UE physical feedback channel (e.g., PSFCH) resource and a transmission of the indicator may be configured (or designed).

According to one embodiment of the present disclosure, a transmitting UE may indicate beam information used for inter-UE physical feedback channel (e.g., PSFCH) transmission to a receiving UE via inter-UE control information (e.g., SCI). For example, this embodiment may be applicable where a transmitting UE generates a receive beam for reception from a plurality of UEs.

For example, a receiving UE may consider that a transmission beam used for an inter-UE physical feedback channel (e.g., PSFCH) transmission will be equally applicable to a subsequent data transmission. For example, whether a transmitting UE applies the transmission beam to subsequent a data transmission may be interpretable via an indicator that allows the operation of the transmitting UE to apply the transmission beam to subsequent data transmissions.

According to one embodiment of the present disclosure, when transmitting inter-UE physical feedback channel (e.g., PSFCH), a transmitting UE may indicate to a receiving UE to perform beam sweeping/repeating-based repetitive transmission. For example, the transmitting UE may thereby select the best transmission beam of the receiving UE and/or adjust its own receive beam.

According to one embodiment of the present disclosure, inter-UE coordination (e.g., IUC) information may have beam-specific characteristics.

For example, a receiving UE may request a UE performing each transmission to use time-division multiplexed (e.g., TDMed) resources if the receive beams used for the different transmissions are different.

For example, beam pair specific information may be included in the inter-UE coordination (e.g., IUC) information.

According to one embodiment of the present disclosure, a method of compensating for inter-UE physical feedback channel (e.g., PSFCH) transmission or inter-UE physical feedback channel (e.g., PSFCH) reception that is omitted by different beam characteristics may be provided.

(Option 1) Configure the re-performance opportunity for beam-based inter-UE physical feedback channel (e.g., PSFCH) transmission or inter-UE physical feedback channel (e.g., PSFCH) reception.

(Option 2) Prevent inter-UE physical feedback channel (e.g., PSFCH) transmissions or inter-UE physical feedback channel (e.g., PSFCH) receptions from being performed on a beam basis, and configure the number of repetitive transmissions/receptions.

According to one embodiment of the present disclosure, a mode 1 supporting method that considers beam-based inter-UE communication operation (e.g., SL operation) may be provided.

According to one embodiment of the present disclosure, a mode 1 resource allocation method for a transmission beam sweeping/repeating operation may be provided.

According to one embodiment of the present disclosure, the assistance information reported to a base station may include the following information

For example, transmission beam sweeping/repetition count information to be used on a unicast link linked to a specific destination ID. Here, for example, the transmission beam repetition count information may be determined/reported based on receive beam formation related capability information received from a peer UE. Here, for example, a resource in the form of a scheduling request (e.g., SR) may be utilized.

For example, Mode 1 inter-UE communication grant (e.g., SL grant) information for which a beam failure recovery (e.g., BFR) procedure occurred.

According to one embodiment of the present disclosure, a method for identifying mode 1 resources in need of reallocation may be provided.

According to one embodiment of the present disclosure, a method for informing a base station of a mode 1 inter-UE communications grant (e.g., SL grant) in which a beam failure recovery (e.g., BFR) procedure has occurred may be provided.

(Option 1) Reporting via uplink physical control channel (e.g., PUCCH) resources (e.g., scheduling requests (e.g., SR), HARQ FB) linked per Mode 1 inter-UE communication grant (e.g., SL grant).

For example, a scheduling request (e.g., SR) resource per logical channel (e.g., LCH) (or, radio bearer) may be configured. For example, this embodiment may be applicable when a logical channel (e.g., LCH) mapping is configured in a mode 1 inter-UE communication grant (e.g., SL grant).

Here, for example, if the beam failure recovery (e.g., BFR) occurrence information is reported before Mode 1 inter-UE communication grant (e.g., SL grant) is additionally allocated, an operation in the form of a scheduling request (e.g., SR) may be better. For example, this embodiment may be interpreted as a request for resources for transmission beam sweeping/repeating.

For example, a scheduling request (e.g., SR) for a receiving UE to request a resource related to beam failure recovery (e.g., BFR) report which it performs to a transmitting UE from a base station may be separately configured.

(Option 2) A method for reporting Mode 1 inter-UE communication grant (e.g., SL grant) information where a beam failure recovery (e.g., BFR) procedure occurred via an uplink physical shared channel (e.g., PUSCH).

For example, Mode 1 inter-UE communication grant (e.g., SL grant) information for which the beam failure recovery (e.g., BFR) procedure occurred may be reported in the form of a MAC control element (e.g., MAC CE), and the scheduling request (e.g., SR) resource for the uplink physical shared channel (e.g., PUSCH) resource allocation request for such purpose may be separately configured. For example, the MAC control element may include linked HARQ process ID information, configured grant (e.g., CG) index information, and the like.

For example, a Mode 1 UE may report assistance information to a base station to allow time division multiplexed (e.g., TDMed) resources to be allocated between transmitting UEs using different beams. For example, a mode 1 UE may additionally report source ID information related to its (and/or the peer's) transmitting UE to a base station.

According to one embodiment of the present disclosure, a method for sensing and resource (re)selection/channel busy ratio (e.g., CBR) measurement may be provided.

According to one embodiment of the present disclosure, a method for determining an available sensing result for transmission beam-based resource selection may be provided.

(Option 1) a case of a slot where sensing was performed with a receive beam that does not cover the transmission beam (and related spatial domain filter).

For example, if sensing is performed with a receive beam that does not cover a transmission beam (and related spatial domain filter), the sensing results (at that slot) may not be used. For example, that the sensing results are not utilized may include considering that no inter-UE control information (e.g., SCI) from other UEs on the corresponding slot was detected, considering the corresponding slot to be unmonitored (non-monitored slot) so that a candidate transmission resource exclusion operation is to be performed, or causing a resource exclusion operation to be performed on a candidate resource linked to the corresponding slot using a previously separately (or independently) configured reference signal received power (e.g., RSRP) threshold value.

(Option 2) For slots where sensing was performed with a receive beam that does not cover the transmission beam (and related spatial domain filter), a pre-configured weight value (e.g., 1) may be applied to the results of that sensing.

(Option 3) If the degree (e.g., quantity or number) that candidate resources related to the sensing slot at issue (i.e., a slot for which sensing was performed with a receive beam that does not cover the transmission beam (and associated spatial domain filter)) are excluded based on Option 2 (and/or Option 1) exceeds a pre-configured threshold, the resource selection method may be switched/fallback to a pre-configured selection scheme (e.g., random resource selection).

For example, if the degree (e.g., quantity or number) that candidate resources related to the sensing slot at issue (i.e., the slot for which sensing was performed with a receive beam that does not cover the transmission beam (and associated spatial domain filter)) are excluded based on option 2 (or, option 1) exceeds a pre-configured threshold, the resource selection operation may be performed based on option 1 (or, option 2).

For example, in unlicensed band communications (e.g., NR-U), for FR2-2, whether a spatial filter (or, beam) covers another spatial filter (or, beam), and the definition of covering, may be determined by the UE implementation.

According to one embodiment of the present disclosure, upon reselecting a transmission beam (or receive beam), various operations described below may be performed.

(Option 1) Reselect a transmission resource

For example, a transmission resource reselection operation may be performed limitedly when the newly selected/designated transmission beam (or receive beam) is not covered by a transmission beam (or receive beam) that is used/allowed by an existing selected/reserved transmission resource.

For example, when an inter-UE physical feedback channel (e.g., PSFCH) discontinuous transmission (e.g., DTX) (and/or reception of an inter-UE physical feedback channel (e.g., PSFCH) including NACK information) consecutively occurs, transmission resource reselection may be triggered. And/or, for example, (if a receiving UE determines that an inter-UE physical feedback channel (e.g., PSFCH) transmissions are consecutively omitted (and/or failed to be detected) due to beam mismatch/degradation or the like), the receiving UE may cause the transmitting UE to trigger resource reselection via pre-configured signaling (e.g., inter-UE control information (e.g., SCI), MAC control element (e.g., MAC CE)).

For example, (transmission resource reselection operation) may vary according to whether beam-specific sensing operations have been performed.

For example, the condition under which beam reselection is triggered may include that resource reselection is performed using a counter based on an existing Rel-16/17 rule, and/or that beam reselection is triggered based on a timer (e.g., whether a data transmission has been performed, etc.).

(Option 2) Values such as beam failure indication (e.g., BFI) count/BEAM_FAILURE_DETECTION timer/BEAM_FAILURE_RECOVERY_TIMER/TANS_MAX_BFR may be reset.

According to one embodiment of the present disclosure, a method for determining an available inter-UE received signal strength indicator (e.g., SL RSSI) used in calculating a channel busy ratio (e.g., CBR) may be provided.

(Option 1) Only slots where an inter-UE received signal strength indicator (e.g., SL RSSI) is measured based on a receive beam that covers a transmission beam (and related spatial domain filter) may be limited to be used in the channel busy ratio (e.g., CBR) calculation.

For example, if the number of slots for which inter-UE received signal strength indicator (e.g., SL RSSI) is measured is less than a pre-configured threshold number, congestion control may be performed by applying a pre-configured default channel busy ratio (e.g., CBR) value.

For example, the number of slots included in the channel busy ratio (e.g., CBR) measurement window may be replaced with the number of slots that satisfy the above conditions (e.g., a pre-configured threshold number).

For example, congestion control-related physical (PHY) transmission parameters (e.g., CR_LIMIT, maximum allowed number of retransmissions, range of selectable modulation coding configuration (e.g., MCS) values, maximum number of selectable subchannels, maximum allowed transmit power values) may be configured specifically for the beam.

(Option 2) If an inter-UE received signal strength indicator (e.g., SL RSSI) is measured on a subchannel based on a received beam that does not cover a transmission beam (related spatial domain filter), the pre-configured inter-UE received signal strength indicator (e.g., SL RSSI) value may be considered as the inter-UE received signal strength indicator (e.g., SL RSSI) for that subchannel.

Alternatively, for example, if an inter-UE received signal strength indicator (e.g., SL RSSI) is measured on a subchannel based on a received beam that does not cover a transmission beam (and related spatial domain filter), the inter-UE received signal strength indicator (e.g., SL RSSI) may be considered not to be measured on that subchannel (and/or, for example, on the related slots).

Alternatively, for example, if an inter-UE received signal strength indicator (e.g., SL RSSI) is measured on a subchannel based on a received beam that does not cover the transmission beam (and related spatial domain filter), a value derived by applying a pre-configured weight value to the measured inter-UE received signal strength indicator (e.g., SL RSSI) value may be used.

(Option 3) An inter-UE received signal strength indicator (e.g., SL RSSI) may be measured per beam, and/or a channel busy ratio (e.g., CBR) calculation may be performed per beam.

For example, whether the above rule is applied may be different according to whether a beam-specific sensing operation is performed.

According to one embodiment of the present disclosure, a method for measuring/reporting an inter-UE communication reference signal received power (e.g., SL RSRP) and deriving an inter-UE communication path (e.g., SL PL) may be provided.

According to one embodiment of the present disclosure, a method for measuring/reporting an inter-UE communication reference signal received power (e.g., SL RSRP) and/or deriving an inter-UE communication pathloss (e.g., SL PL) may be provided when a plurality of transmission/reception beam pairs are used.

(Option 1) Measurement/reporting of the inter-UE communication reference signal received power (e.g., SL RSRP) or derivation of the inter-UE communication path (e.g., SL PL) may be performed independently for each transmission/reception beam pair.

For example, when the transmission/reception beam pair is reconfigured/changed, the linked existing L3 filter coefficient-based inter-UE communication reference signal received power (e.g., SL RSRP) measurement value or inter-UE communication reference power (e.g., SL reference power) value may be configured to be reset (or a UE may be configured to reset the above values).

For example, when reporting an inter-UE communication reference signal received power (e.g., SL RSRP) measurement value, the linked transmission/reception beam pair information may also be signaled.

(Option 2) Measurement/reporting of inter-UE communication reference signal received power (e.g., SL RSRP) and inter-UE communication pathloss (e.g., SL PL) may be derived by averaging beam-related information (e.g., measured values) with reference signal received power (e.g., RSRP) values greater than or equal to a pre-configured threshold.

And/or, for example, measurement/reporting of an inter-UE communication reference signal received power (e.g., SL RSRP), and an inter-UE communication pathloss (e.g., SL PL) may be derived using (or based only on) information related to the beam with the best reference signal received power (e.g., RSRP) value.

And/or, for example, the measurement/reporting of inter-UE communication reference signal received power (e.g., SL RSRP) and inter-UE communication pathloss (e.g., SL PL) may be derived using (or based only on) pre-configured beam-related information for that purpose.

(Option 3) Measurement/reporting of inter-UE communication reference signal received power (e.g., SL RSRP) and/or derivation of inter-UE communication pathloss (e.g., SL PL) may be performed per beam.

According to one embodiment of the present disclosure, a beam-based inter-UE radio link failure (e.g., SL RLF) operation method may be provided.

According to one embodiment of the present disclosure, a method for operating an inter-UE radio link failure (e.g., SL RLF) when a plurality of transmission/reception beam pairs are used may be provided.

(Option 1) A discontinuous transmission (e.g., DTX) count/inter-UE radio link failure (e.g., SL RLF) management method per transmission/reception beam pair.

For example, PC5 link may be released only when an inter-UE radio link failure (e.g., SL RLF) occurs on all (and/or a pre-configured) transmission/reception beam pairs. Alternatively, for example, PC5 link may be released when an inter-UE radio link failure (e.g., SL RLF) occurs on any one of a plurality of transmission/reception beam pairs.

For example, (when PC5 link is released) a reselection procedure for a beam with declared inter-UE radio link failure (e.g., SL RLF) may be triggered.

(Option 2) Management of discontinuous transmission (e.g., DTX) counts/inter-UE radio link failures (e.g., SL RLF) without distinction between multiple transmission/reception beam pairs.

According to one embodiment of the present disclosure, when a beam reselection procedure (or, a beam failure recovery (e.g., BFR) procedure) is not successful within a pre-configured timer, an inter-UE radio link failure (e.g., SL RLF) may be declared for the unicast link.

According to one embodiment of the present disclosure, if there is no available beam (above a pre-configured threshold quality) (within a pre-configured timer) after the beam failure recovery (e.g., BFR) procedure is triggered per beam, an inter-UE radio link failure (e.g., SL RLF) may be declared.

For example, a slot where only the inter-UE physical feedback channel (e.g., PSFCH) resources (and/or, transmission (and/or, reception) resources) related to beam failure recovery (e.g., BFR) requests exist may be introduced.

According to one embodiment of the present disclosure, the effect on inter-UE discontinuous reception (e.g., SL DRX) is described.

For example, a beam operation related reference signal (e.g., inter-UE channel state information reference signal (e.g., SL CSI-RS)) may be transmitted (within the same slot) along with inter-UE control information (e.g., SCI) (and/or data). Here, for example, a time window during which a beam pairing/beam failure recovery (e.g., BFR) procedure is performed may be considered as an active time of inter-UE discontinuous reception (e.g., SL DRX) operation.

For example, when a base station or transmitting UE determines an inter-UE discontinuous reception (e.g., SL DRX) pattern of the other UE, the assistance information may include reporting additional information related to a beam.

According to one embodiment of the present disclosure, the effect of a beam failure in a base station-to-UE communication (e.g., Uu communication) link on inter-UE communication operation (e.g., SL operation) may be described.

For example, even if a beam failure occurs in base station-to-UE communication (e.g., Uu communication) link, a Mode 1 UE may continue to use Mode 1 resources (e.g., SL configured grant (e.g., CG) type 1/2) until the beam failure recovery (e.g., BFR) procedure fails or until a pre-configured timer expires. Alternatively, for example, a Mode 1 UE may inform a peer UE about this state.

According to one embodiment of the present disclosure, an inter-UE synchronization signal block (e.g., SL SSB) receive beam may be applied differently.

For example, the sync reference selection may be different for each (reception) beam. In this case, a UE may need to support multiple sync tracking.

According to one embodiment of the present disclosure, technologies related to FR2 inter-UE communication (e.g., SL communication) may be provided.

For example, a method may be provided for determining a position of a beam used for transmitting an inter-UE synchronization signal block (e.g., SL SSB) between a transmitting UE and a receiving UE, for each beam used by the UE for transmitting the inter-UE synchronization signal block (e.g., SL SSB). For example, the method may include sensing-based location change, timer-based location change, and the like. For example, the transmission position, sequence of the inter-UE synchronization signal block (e.g., SL SSB) beam may be determined based on a UE ID, etc.

For example, a pattern of inter-UE synchronization signal block (e.g., SL SSB) beam transmission locations may be systematically determined, such as a direct communication request (e.g., DCR)/direct communication acknowledgment (e.g., DCA).

For example, an inter-UE discontinuous reception (e.g., SL DRX) active time for reception of a direct communication request (e.g., DCR)/direct communication acknowledgment (e.g., DCA) may be linked to an inter-UE synchronization signal block (e.g., SL SSB) beam transmission/reception location.

For example, selected beam index/measurement information may be reported using a direct communication request (e.g., DCR)/direct communication acknowledgment (e.g., DCA) message. For example, a plurality of inter-UE channel state information reference signals (e.g., SL CSI-RS) may be included in a message.

For example, when selecting a beam for inter-UE communication (e.g., SL communication), the load factor (rather than only the average signal-to-noise ratio (e.g., SINR)) may be considered.

For example, the operation of selecting a beam itself may be interpreted as part of resource selection. Thus, when selecting a beam, a UE may not consider the interference level at an average level, but rather the interference level per resource, and may select or recommend to a peer UE a beam with many resources with relatively low interference levels. For example, the latter may be interpreted as part of an inter-UE coordination (e.g., IUC) operation.

For example, the conditions described above may be the conditions for triggering beam reselection.

According to one embodiment of the present disclosure, a UE may, in terms of inter-UE communication (e.g., SL communication) beam failure recovery, indicate that a reference signal must be transmitted in a transmission subsequent to a previous transmission and cause a UE to determine that a beam failure has been detected if it is not detected.

According to one embodiment of the present disclosure, an inter-UE communication (e.g., SL communication) beam failure detection reference signal may be provided.

For example, the related priority of an inter-UE communication (e.g., SL communication) beam failure detection reference signal may be configured relatively higher than that of an existing reference signal.

According to one embodiment of the present disclosure, an embodiment related to FR2 inter-UE communication (e.g., SL communication) may be provided.

For example, frequency division multiplexing (e.g., FDM) between a beam reference signal and a phase tracking reference signal (e.g., PTRS)/demodulation reference signal (e.g., DMRS)/channel state information reference signal (e.g., CSI-RS) may (or may not) be possible. For example, frequency division multiplexing may not be possible under normal conditions, but may be possible when QCL Type D is established.

According to one embodiment of the present disclosure, it may be determined whether a beam sweeping operation for sensing is required.

For example, similar to partial sensing, a slot of a specific pattern within a sensing window may be designated and a y-slot may be designated within a selection window.

For example, in the case of correlation between the results of sensing with different reception beams (boosting the reference signal received power (e.g., RSRP) value), the reference signal received power (e.g., RSRP) boosting value may be configured by the network per correlation.

For example, when performing resource selection and transmission on resources that are not sensed by a reception beam, the transmit power may be reduced by an offset. For example, the offset value may vary according to priority.

For example, similar to partial sensing, the above may also be applied when a beam-based sensing/linked resource pattern is determined, and when using a selection window slot other than the one linked to the sensing receive beam.

For example, as described above, a power offset may be applied based on correlation. It may not be limited to simply using a resource where no receive beam-based sensing is performed.

According to one embodiment of the present disclosure, a transmitting UE may select a resource using rough receive beam sensing and reselect it using inter-UE coordination (e.g., IUC) or the like.

For example, when a transmitting UE fails to ideally select a transmission beam to be used for communication with a receiving UE due to its receive beam-based sensing operation, the receiving UE may transmit an inter-UE coordination (e.g., IUC) message based on its receive beam-based sensing results to trigger a resource reselection/-transmission beam reselection used by the transmitting UE.

For example, since the transmission beam to be used for the selected resource selection after resource selection will be determined based on the receive beam used for sensing, the transmission beam and destination UEs that can be selected on that resource in the logical channel prioritization (e.g., LCP) procedure may be limited. For example, if a receive beam of a receiving UE is designated on a resource, or a transmission beam of a transmitting UE is designated on the resource, the limitation may be applied to the selection of a destination UE in the logical channel prioritization (e.g., LCP) procedure.

According to one embodiment of the present disclosure, upward communication (e.g., Uu UL communication) of base station-to-UE communication and transmission of inter-UE communication (e.g., SL communication) may be performed simultaneously using different beams.

In this case, whether to perform the simultaneous inter-UE communication (e.g., SL communication) transmission may be determined using an estimated amount of interference to the upward communication (e.g., UL communication) based on correlation with the uplink communication (e.g., UL communication) transmission beam. For example, additionally, only the higher priority inter-UE communication (e.g., SL communication) transmission may be allowed if the inter-UE communication (e.g., SL communication) transmission causes interference with the upward communication (e.g., UL communication) transmission.

According to one embodiment of the present disclosure, when a beam reselection is performed (e.g., a beam failure recovery (e.g., BFR) procedure, beam fine tuning, etc.), a resource reselection may be triggered. Specifically, when a beam used for sensing related to the selected resource is no longer available (e.g., the sensing-related spatial filter does not cover the newly selected beam), resource reselection may be triggered.

For example, counter parameters used to trigger resource reselection may need to be operated in a beam specific manner. For example, if a transmission that is not covered by the sensing related spatial filter is performed on the selected resource, the corresponding transmission may not be counted or may be counted by applying a pre-configured weight value. The reason for this may be that no sensing was performed on beams other than the sensing spatial filter used for resource selection.

According to one embodiment of the present disclosure, a method for performing discontinuous transmission (e.g., DTX) counting in a beam domain may be provided.

For example, when counting discontinuous transmissions (e.g., DTX) independently per beam and the counter value reaches the maximum count of discontinuous transmissions (e.g., DTX) in all serving beams, an inter-UE radio link failure (e.g., SL RLF) may be declared. Alternatively, for example, when counting discontinuous transmissions (e.g., DTX) across beams and the counter value reaches the maximum counting value, an inter-UE radio link failure (e.g., SL RLF) may be declared. Alternatively, for example, when counting discontinuous transmissions (e.g., DTX) per beam, and all beams have reached a pre-configured maximum values, the discontinuous transmission (e.g., DTX) count related to the declaration of an inter-UE radio link failure (e.g., SL RLF) may be incremented by one, and when the value of the latter count reaches the maximum value, an inter-UE radio link failure (e.g., SL RLF) may be declared.

For example, the counting value may be initialized when a beam reselection is performed, when a beam failure recovery (e.g., BFR) is triggered, or when a beam failure recovery (e.g., BFR) procedure is successful. Alternatively, the counting value may be maintained regardless.

According to one embodiment of the present disclosure, a cross slot scheduling method may be provided.

For example, inter-UE control information (e.g., SCI) transmissions may be performed on an omni-beam basis, while a directional beam may be applied to inter-UE physical shared channel (e.g., PSSCH) transmissions scheduled in different slots.

For example, what spatial filter should be applied to the reception of inter-UE control information (e.g., SCI) per slot may be pre-configured.

According to one embodiment of the present disclosure, the random access procedure may be triggered at the MAC layer when only physical signals related to the transmission of beam-related reference signals are transmitted in FR2 inter-UE communication (e.g., SL communication).

For example, the priority related to the corresponding reference signal (e.g., related to a logical channel prioritization (e.g., LCP) procedure or sensing, etc.) may be pre-configured or configured by the network.

For example, multiplexing of a reference signal and data may be limited to be allowed only when the same spatial filter can be applied to both the transmission of the reference signal and the transmission of the data. For example, this may be due to the impact of logical channel prioritization (e.g., LCP).

For example, when the measurement value for a beam reference signal is reported, inter-UE channel state information (e.g., SL CSI) may also be reported.

According to one embodiment of the present disclosure, when a beam reference signal is transmitted, in calculating the sensing-related reference signal received power (e.g., RSRP), a beam reference signal may be used or an inter-UE physical channel demodulated reference signal (e.g., PSCCH/PSSCH DMRS) may be used. For example, this may be in consideration of the case where the power spectral density (e.g., PSD) per resource element (e.g., RE) of the beam reference signal is different from that of the demodulation reference signal (e.g., DMRS). This issue may be alleviated by a sensing-related reference signal receive power (e.g., RSRP) value that an Rel-18 UE applies being configured independently.

For example, a muting pattern (e.g., inter-UE physically shared channel (e.g., PSSCH) rate matching pattern) that considers channel state information reference signals (e.g., CSI-RS) with different power spectral densities (e.g., PSD) per resource element (e.g., RE) may be required.

For example, a measurement gap may be configured/signaled for measurement/detection for a beam reference signal (with different beams applied).

For example, selectable resource candidates may be limited due to antenna/beam switching gap.

According to one embodiment of the present disclosure, an inter-UE channel state information reference signal (e.g., SL CSI-RS) resource set may be defined, and an aggregation of these units may be used.

According to one embodiment of the present disclosure, a limitation may be applied to a transmission beam used for transport block (e.g., TB) transmissions on a plurality of inter-UE physical shared channel (e.g., PSSCH) slots linked to an inter-UE physical feedback channel (e.g., PSFCH) slot. For example, this may be to allow a transmitting UE to receive inter-UE physical feedback channel (e.g., PSFCH) transmissions related to a plurality of transport blocks (e.g., TBs) using a single receive beam, and/or to allow a receiving UE to transmit inter-UE physical feedback channel (e.g., PSFCH) transmissions related to a plurality of transport blocks (e.g., TBs) using a single transmission beam. Alternatively, for example, beam information related to an inter-UE physical feedback channel (e.g., PSFCH) transmission to be applied in an inter-UE physical feedback channel (e.g., PSFCH) resource related to a transport block (e.g., TB) may be signaled in the inter-UE physical control channel (e.g., PSCCH).

According to one embodiment of the present disclosure, transmission/reception beam (sweeping) information applied on resources related to the inter-UE physical feedback channel (e.g., PSFCH), inter-UE physical channel (e.g., PSCCH/PSSCH) may need to be designated in advance (especially when an inter-UE physical feedback channel (e.g., PSFCH) transmission is repeatedly transmitted using a plurality of beams). This allows a transmitting and a receiving UEs to communicate with beam gain.

According to one embodiment of the present disclosure, a list of candidate beams/reference signal resources used for radio link monitoring (e.g., RLM)/beam failure recovery (e.g., BFR) operations may be pre-configured between UEs.

For example, an inter-UE communication synchronization signal block (e.g., S-SSB) may also be transmitted on a sensing basis. Here, for example, a UE ID may be embedded.

For example, an inter-UE communication synchronization signal block (e.g., S-SSB) may be used for beam operation/pairing.

According to one embodiment of the present disclosure, technologies related to FR2 inter-UE communications (e.g., SL communications) may be provided.

For example, a resource pool may include a dedicated pool, a cross scheduling pool (i.e., shared pool + dedicated pool), and a shared pool. Here, for example, only an inter-UE channel state information reference signal (e.g., SL CSI-RS) may be transmitted in the dedicated pool. Alternatively, for example, inter-UE channel state information reference signaling (e.g., SL CSI-RS) and inter-UE physical control channel (e.g., PSCCH)/second inter-UE control information (e.g., SCI) may be transmitted together.

For example, backward compatibility issues may be more likely to occur in shared pools. (e.g., ensuring demodulated reference signals (e.g., DMRS) used for sensing, automatic gain control (e.g., AGC) issues, etc.)

According to one embodiment of the present disclosure, when a plurality of inter-UE physical shared channel (e.g., PSSCH) slots linked to an inter-UE physical feedback channel (e.g., PSFCH) exist, when an inter-UE physical shared channel (e.g., PSSCH) transmission of a specific beam is performed on an inter-UE physical shared channel (e.g., PSSCH) slot, or when a specific beam-based inter-UE communication (e.g., SL communication) grant resource is reserved, the inter-UE physical shared channel (e.g., PSSCH) transmission resource based on different beam may be selected from different inter-UE shared channel (e.g., PSSCH) slots, other than the corresponding plurality of inter-UE physical shared channel (e.g., PSSCH) slots.

Alternatively, for example, a resource based on a different beam that has already been selected/reserved for that inter-UE physical shared channel (e.g., PSSCH) slot may be reselected. Here, for example, a lower priority may be reselected.

According to one embodiment of the present disclosure, a method for considering a beam in an inter-UE physical feedback channel (e.g., PSFCH) prioritization operation may be provided.

For example, in the case of a transmission-transmission conflict or a reception-reception conflict, after selecting the highest priority inter-UE physical feedback channel (e.g., PSFCH) transmission, an inter-UE physical feedback channel (e.g., PSFCH) transmission with higher priority among the remaining inter-UE physical feedback channel (e.g., PSFCH) transmissions covered by the spatial filter related to that inter-UE physical feedback channel (e.g., PSFCH) may be performed first.

For example, in the case of a transmission-reception conflict, after comparison between the transmission representative priority and the reception representative priority, an operation similar to a transmission-transmission conflict or reception-reception conflict may be performed so that the higher priority operation is performed.

Alternatively, for example, a UE that intends to transmit a plurality of inter-UE physical feedback channels may form a transmission beam that covers all of the selected plurality of inter-UE physical feedback channel (e.g., PSFCH) transmissions based on UE capability and power limitation (or higher than equal to a pre-configured threshold rank).

Alternatively, for example, a UE that intends to transmit a plurality of inter-UE physical feedback channels may form a receive beam that covers all of the selected plurality of inter-UE physical feedback channel (e.g., PSFCH) receptions based on UE capability or higher than equal to a pre-configured threshold rank.

According to one embodiment of the present disclosure, a method for dealing with coexistence (Co-Ex) between LTE inter-UE communications (e.g., SL communications)/NR inter-UE communications (e.g., SL communications) may be provided.

For example, if the ratio of candidate resources covered by the LTE inter-UE (e.g., SL communication) based S_B resources does not satisfy X% within the NR inter-UE (e.g., SL communication) selection window, resources outside the S_B that satisfy the NR inter-UE (e.g., SL communication) sensing results may be allowed to be selected.

For example, if X% is still not satisfied, a transmitting UE may boost the reference signal reception power (e.g., RSRP) threshold for a candidate resource for NR inter-UE communication (e.g., SL communication) within and outside the S_B set. Alternatively, for example, the above boosting operation may not be allowed to be performed.

Alternatively, for example, by boosting the NR inter-UE communication reference signal reception power (e.g., SL RSRP) threshold (by a pre-configured maximum number of times) only for resources in the S_B set for LTE inter-UE communication (e.g., SL communication), the number of candidate resources may be the number of resources that satisfy X%. (If X% is still not satisfied, the UE may randomly add resources that have been excluded ay unmonitored slots in the S_B set.)

Alternatively, for example, when composing S_B from S_A based on the sensing of LTE inter-UE communication (e.g., SL communication), if there are resources left over, they can be prioritized for use.

For example, S_A set based on LTE inter-UE communication (e.g., SL communication) sensing may be used for NR inter-UE communication (e.g., SL communication) sensing-based resource selection.

For example, even a resource outside the S_B set of the LTE inter-UE communication (e.g., SL communication) may be allowed to be selected as a transmission resource for the NR inter-UE communication (e.g., SL communication) if it satisfies the NR inter-UE communication reference signal reception power (e.g., SL RSRP) threshold reference value (e.g., in particular, if the S_B set of the LTE inter-UE communication (e.g., SL communication) does not satisfy X% of the NR inter-UE communication (e.g., SL communication)).

According to one embodiment of the present disclosure, an operation that may be performed when NR inter-UE communication (e.g., SL communication) and LTE inter-UE communication (e.g., SL communication) with different numerologies coexist may be provided.

For example, if the SCS between an NR inter-UE communication (e.g., SL communication) and an LTE inter-UE communication (e.g., SL communication) are different, an intra-carrier interference (e.g., ICI) problem (e.g., a problem in which a receiving UE performing an LTE inter-UE communication (e.g., SL communication) performs a reception operation and receives interference caused by an NR inter-UE communication (e.g., SL communication) signal) may occur. Wherein, (e.g., when performing resource selection for NR inter-UE communication (e.g., SL communication)) the interference problem within the carrier may be solved by configuring a resource block (e.g., RB) gap between an LTE inter-UE communication (e.g., SL communication) resource and an NR inter-UE communication (e.g., SL communication) resource.

According to one embodiment of the present disclosure, considering radio link failure (e.g., RLF) in inter-UE communication in unlicensed band (e.g., SL-U), when there are many selectable resources, more than 32 according to prior art (considering radio link failure (e.g., RLF)) backup resources may not be considered a granted resource when calculating the channel occupancy ratio (e.g., CR).

For example, when using such backup resources, if the required number of retransmissions is met, the remaining backup resources may be released and not counted in the calculation of the channel occupancy ratio (e.g., CR).

For example, if an inter-UE synchronization signal block (e.g., SL SSB) is included in the resource pool, the inter-UE synchronization signal block (e.g., SL SSB) may not be limited by the channel occupancy ratio (e.g., CR) limit.

When transmitting a plurality of inter-UE physical feedback channels (e.g., PSFCH) simultaneously, it may be discussed how to count the failures of the channel sensing (e.g., LBT) related to the channel access procedure.

For example, the method for counting failures of the channel sensing (e.g., LBT) related to the channel access procedure may be different according to the representative inter-UE physical feedback channel (e.g., PSFCH) assumed when performing the channel sensing (e.g., LBT) related to the channel access procedure.

For example, the method of counting failures of the channel sensing (e.g., LBT) related to the channel access procedure may be different when the guard band is configured and when the guard band is not configured.

According to one embodiment of the present disclosure, a method of configuring the number and/or location of symbols related to a measurement of a received signal strength indicator (e.g., RSSI) in an unlicensed band communication (e.g., NR-U) may be provided.

For example, in consideration of a multi-starting point in a base station-to-UE communication (e.g., NR-U) in an unlicensed band, a measurement of a received signal strength indicator (e.g., SL RSSI) in an inter-UE communication (e.g., SL-U) in an unlicensed band may change based on operations of the multi-starting point. For example, when a channel sensing (e.g., LBT) failure related to a channel access procedure occurs at the first start point, the received signal strength indicator (e.g., RSSI) may need to be measured for a corresponding first half interval.

For example, a received signal strength indicator (e.g., RSSI) may be measured for a full slot interval and a half slot interval (e.g., first half, second half), respectively.

For example, according to what length of time resource a UE uses (especially when no inter-UE physical feedback channel (e.g., PSFCH) resource is configured), congestion control may be performed by applying different received signal strength indicator (e.g., RSSI).

For example, the received signal strength indicator (e.g., RSSI) may be measured for a full slot interval and a half slot interval (e.g., first half, second half). Here, for example, a representative value (e.g., maximum value, average value, etc.) of the received signal strength indicator (e.g., RSSI) for a slot may be defined.

For example, a reference parameter used for a measurement of a received signal strength indicator (e.g., RSSI) in a slot interval may be defined. For example, the number and/or location of (consecutive) symbols, SCS, the length of a cyclic prefix (e.g., CP), or the like (excluding automatic gain control (e.g., AGC) symbols) may be (pre-)configured as the reference parameter.

According to one embodiment of the present disclosure, a method for modifying a failure granularity of channel sensing related to a channel access procedure (e.g., LBT), that is reported by a physical layer of a UE to a MAC layer of the UE, on an inter-UE communication (e.g., SL-U) on an unlicensed band, when an additional synchronization signal block (e.g., SSB) is included in the pool, may be provided.

For example, special handling in preparation for synchronization signal blocks (e.g., SSB) to be transmitted outside of the pool may be required.

For example, as a compromise, the physical layer of the UE may report to the MAC layer of the UE a failure of the channel sensing (e.g., LBT) related to the channel access procedure, per resource block (e.g., RB) set per resource pool.

According to one embodiment of the present disclosure, when frequency division multiplexing (e.g., FDM) between the additional synchronization signal blocks (e.g., SSB) and the inter-UE physical channel (e.g., PSCCH/PSSCH) is enabled when the additional synchronization signal blocks (e.g., SSB) are included in the pool, an automatic gain control (e.g., AGC) symbol may be additionally configured on the additional synchronization signal block (e.g., SSB), if such frequency division multiplexing (e.g., FDM) may be exceptionally disabled.

For example, only a single cyclic prefix extension (e.g., CPE) may be allowed in an additional synchronization signal block (e.g., SSB) slot. For example, this may be to prevent an inter-UE physical shared channel (e.g., PSSCH) from blocking the synchronization signal block (e.g., SSB).

According to one embodiment of the present disclosure, in a narrow band operation (wherein, for example, the narrow band may be a single resource block set (e.g., RB set) or a plurality of resource block sets (e.g., RB sets)), by a wide UE additionally transmitting inter-UE control information (e.g., SCI) in the narrow band region, the occurrence of resource conflicts on the narrow band that may occur when the narrow UE cannot read inter-UE control information (e.g., SCI) of the wide UE may be alleviated.

For example, a wide UE may be blocked by causing a narrow UE to select an earlier starting point for a cyclic prefix extension (e.g., CPE).

For example, a wide UE may inform a narrow UE about a non-preferred resource set.

For example, a narrow UE may only use subchannels with a high subchannel index in the resource pool. For example, here, a wide UE may be limited to not use the corresponding region, or it may be limited to use the region but only as a narrow band form.

For example, a cyclic prefix extension (e.g., CPE) may be applied even if a second start point is used.

According to one embodiment of the present disclosure, when a UE performs a plurality of inter-UE physical feedback channel (e.g., PSFCH) transmissions, if the channel access types related to each are different, the channel access procedure may be performed by unifying to a type with a longer sensing duration.

According to one embodiment of the present disclosure, when an inter-UE physical feedback channel (e.g., PSFCH) is repeated only on some inter-UE physical feedback channel (e.g., PSFCH) slots, whether to maintain a minimum gap between consecutive inter-UE physical shared channel (e.g., PSSCH) transmissions may be configured.

According to one embodiment of the present disclosure, reference signal received power (e.g., RSRP) threshold values related to an operation to exclude candidate resources for NR inter-UE communication (e.g., SL communication) overlapping with LTE inter-UE communication (e.g., SL communication) may be different. For example, at one extreme, the threshold value may be negative infinity.

According to one embodiment of the present disclosure, the size of the sensing window in which the T_valid value is configured, the size of the channel occupancy ratio (e.g., CR) window, and/or the periodicity of the synchronization signal block (e.g., SSB) transmission may be configured.

According to one embodiment of the present disclosure, in FR2 inter-UE communication (e.g., SL communication), the beam used for sensing (or a beam used for the corresponding beam) may be used for a transmission. For example, even if a beam other than that beam is used (e.g., may be limited by correlation), the transmission may be performed by reducing the transmit power based on the correlation.

According to one embodiment of the present disclosure, when controlling a transmit power based on an inter-UE communication pathloss (e.g., SL PL), a method for designating/signaling a reference signal and a method for configuring a transmit power of the reference signal when performing a beam failure recovery (e.g., BFR) procedure may be provided.

According to one embodiment of the present disclosure, in an inter-UE communication (e.g., SL communication) of FR2, a method of selecting an inter-UE physical shared channel (e.g., PSSCH) resource and configuring a beam for receiving a plurality of inter-UE physical feedback channels (e.g., PSFCH) of a transmitting UE may be limited.

For example, beam conflicts may be indicated through inter-UE coordination (e.g., IUC) signaling.

For example, a beam linkage between an inter-UE physical shared channel (e.g., PSSCH) resource and an inter-UE physical feedback channel (e.g., PSFCH) resource may be configured.

For example, if an inter-UE physical feedback channel (e.g., PSFCH) transmitted to a channel occupancy time (e.g., COT) initiator UE must be included in the shared channel occupancy time (e.g., COT) on an unlicensed band (e.g., SL-U), the inter-UE physical feedback channel (e.g., PSFCH) prioritization procedure may be affected.

For example, the corresponding inter-UE physical feedback channel (e.g., PSFCH) may not be dropped due to capability limitation because it has a low priority. Alternatively, for example, if the corresponding inter-UE physical feedback channel (e.g., PSFCH) is dropped, the remaining inter-UE physical feedback channel (e.g., PSFCH) transmissions may also be dropped.

For example, an inter-UE physical feedback channel (e.g., PSFCH) transmission based on a common resource block (e.g., RB) may be considered a broadcast inter-UE physical feedback channel (e.g., PSFCH) transmission. For example, when the corresponding inter-UE physical feedback channel (e.g., PSFCH) transmission is transmitted, all other remaining inter-UE physical feedback channel (e.g., PSFCH) transmissions may also be colocated (e.g., channel occupancy time (e.g., COT)).

According to one embodiment of the present disclosure, when a channel sensing (e.g., LBT) failure related to the channel access procedure occurs, in case of a HARQ feedback disabled transport block (e.g., TB), a resource reselection procedure (in which the entire grant is not reselected, but only additional resources are obtained) related to a channel sensing (e.g., LBT) failure related to the channel access procedure is not immediately performed, and may only be performed if the failure occurs a pre-configured number of consecutive times.

For example, the above operation may not be applied to HARQ feedback enabled transport blocks (e.g., TB). This may be due to the fact that an ACK may be received from a receiving UE even if the resource reselection procedure is not performed.

For example, since the resource selection procedure related to a HARQ feedback enabled transport block (e.g., TB) requires a minimum gap to be considered, if resource reselection is triggered too late, there may not be enough resources available for selection.

According to one embodiment of the present disclosure, upon resource reselection (additional resource selection) due to failure of channel sensing (e.g., LBT) related to the channel access procedure, the periodicity of the resource being reselected may always be set to zero if periodic resource scheduling is enabled. For example, this may be operation that considers conflicts with Wi-Fi communication.

For example, a transmitting UE may measure the energy in the transmission/reception symbols preceding an inter-UE physical feedback channel (e.g., PSFCH) resource and distinguish whether a discontinuous transmission (e.g., DTX) has occurred or a failure of channel sensing (e.g., LBT) related to the channel access procedure.

According to one embodiment of the present disclosure, when an NR module excludes resources related to non-monitored slots caused by NR transmissions, it may consider all resource periods related to the LTE pool.

For example, when Step 5 of the resource selection procedure of the NR communication is performed, an exclusion where the resource period related to the LTE pool is considered may not be restored, or its restoration may be de-prioritized.

For example, if there is overlap between an NR synchronization signal block (e.g., SSB) and an LTE pool (or between an LTE synchronization signal block (e.g., SSB) and an NR pool), there may be a need to discuss how to address the overlap with an LTE inter-UE communication (e.g., SL communication) transmission (or inter-UE physical feedback channel (e.g., PSFCH) transmission).

For example, whether an inter-UE physical feedback channel (e.g., PSFCH) transmission whose time/frequency resources overlap with an LTE inter-UE communication (e.g., SL communication) transmission when no additional inter-UE physical feedback channel (e.g., PSFCH) period is configured may be discussed.

For example, if the power required for simultaneous inter-UE physical feedback channel (e.g., PSFCH) transmissions reaches P_CMAX, performing both high priority inter-UE physical feedback channel (e.g., PSFCH) transmission and low priority inter-UE physical feedback channel (e.g., PSFCH) transmission may not increase the automatic gain control (e.g., AGC) problem on LTE inter-UE communication (e.g., SL communication).

For example, when a higher SCS is configured, operations that fill gap symbols between NR inter-UE communication (e.g., SL communication) slots, or operations that address inter-UE physical feedback channel (e.g., PSFCH) resources may be limited to the second slot.

According to one embodiment of the present disclosure, in FR2 inter-UE communication (e.g., SL communication), a UE may perform sensing and resource selection limitedly, within a slot (e.g., it may be interpreted as a resource time point where a peer UE can apply an optimal reception spatial filter to receive a packet transmitted by a transmitting UE) that is agreed with or recommended by the peer UE.

According to one embodiment of the present disclosure, a method for resolving a resource conflict problem with UEs performing communication according to prior art when an inter-UE channel state information reference signal (e.g., SL CSI-RS) is transmitted in a shared pool may be provided.

According to one embodiment of the present disclosure, when a beam channel state information reference signal (e.g., CSI-RS) is frequency division multiplexed (e.g., FDMed) with an inter-UE physical feedback channel (e.g., PSFCH) resource, a prioritization rule between them may be provided. For example, the prioritization rule may include a rule such that the SL HARQ ACK is always set to a high priority.

According to one embodiment of the present disclosure, based on the receive beam used for sensing, a selectable data transmission beam may be determined (for a transmission operation).

Here, for example, if the receive beam used for sensing does not cover a selectable data transmission beam, a method for generating an inter-UE communication (e.g., SL communication) grant (or, resource information) may be discussed.

For example, if the receive beam used for sensing does not cover the selectable data transmission beam, the inter-UE communication (e.g., SL communication) grant (or resource information) may be dropped.

Alternatively, for example, a beam reselection procedure may be triggered.

Alternatively, for example, sensing may be performed until an available sensing result is obtained based on the corresponding reception beam.

Alternatively, for example, if the receive beam used for sensing does not cover a selectable data transmission beam, an inter-UE communication (e.g., SL communication) grant (or, resource information) may be randomly selected.

According to one embodiment of the present disclosure, whether a data transmission beam is to be performed for a sensing operation (e.g., determining a receive beam to be used for sensing) may be determined.

For example, a method for dealing with other unicast session, groupcast/broadcast (e.g., BC) related reception may be discussed. For example, based on priority, it may be determined whether to perform sensing based on the data transmission beam or perform other unicast session, groupcast/broadcast (e.g., BC) related reception operations. Here, basically, it may be assumed that a sensing reception beam is applied that is determined (or corresponding) by a data transmission beam.

For example, the above problem may be solved by ensuring that a reception operation is performed based on an omni-beam and only a transmission operation is performed by applying beamforming.

For example, even if a periodic beam reference signal transmission operation is performed, it may not actually be a precise periodic transmission, so a slot offset may occur according to the sensing results, and the receiving UE may notify this through predefined signaling.

For example, when legacy reference signal transmission is supported in terms of beam operations, a method of performing power saving may be discussed. For example, the method may include timer-based operation or request-based operation from a peer UE.

For example, in a resource selection procedure, based on a parameter such as load (or, congestion level or (packet) priority), whether a reception beamforming is applied to a sensing operation or the width of the reception beam for a sensing operation may be configured differently. For example, for lower load, reception beamforming may be applied to a sensing operation, otherwise an omni-beam may be applied as the receive beam for the sensing operation.

According to one embodiment of the present disclosure, a method of performing inter-cell interference coordination (e.g., ICIC) operation may be considered. For example, the method may be supported based on inter-UE coordination (e.g., IUC) operation.

For example, if a UE measures a beam reference signal transmitted by other neighboring UEs based on a specific receive beam (e.g., an inter-UE communication (e.g., SL communication) beam reference signal or an uplink communication (e.g., UL communication) beam reference signals) and report it to a base station, the base station may recognize from which transmission beams the UE receives strong interference when applying a specific receive beam, and may consider avoidance/interference reduction methods when allocating resources to the UE linked to the transmission beam causing interference.

Here, for example, it may be assumed that a base station informs a UE of sequence/resource information (and/or ID information and/or resource location information used), etc. for a beam reference signal transmitted by other UEs (e.g., UEs in different inter-UE communication (e.g., SL communication) sessions).

For example, a base station may only provide information about a resource. Alternatively, for example, a base station may also provide information about a resource and a beam to be used from that resource.

For example, it may be useful for a UE to perform the related measurement/reporting operation for the above operation before a unicast session is established.

For example, the above rule may also apply in mode 2. Here, for example, a resource used for the transmission of the measurement/beam reference signals may be pre-configured.

The various features described in the present disclosure may be differently applied per unicast session (group), per cast type, per transmission priority value, per reception priority value, per inter-UE communication (e.g., SL communication) where HARQ-ACK feedback enabled/disabled, per inter-UE communication (e.g., SL communication) HARQ-ACK feedback option, per quality of service (e.g., QoS) parameter, per (remaining) packet delay budget (e.g., PDB), per congestion control level, per (transmission and/or reception) resource pool, per mobility related information of a UE (e.g., speed, velocity, direction, acceleration, position, height, etc.), per sidelink transmission or reception, per HARQ process, per beam process, per source ID, per destination ID, and/or per transport block (e.g., TB).

According to various embodiments of the present disclosure, the units of the (pre)-configuration may be comprised in the form of different combinations of the above. For example, in various embodiments of the present disclosure, parameter indication and management via an inter-UE physical control channel (e.g., PSCCH), an inter-UE physical shared channel (e.g., PSSCH) may be performed as a unit in the form of different combinations of the above. In various embodiments of the present disclosure, spatial setting and/or TCI information and/or QCL information, etc. may be interpreted as referring to each other and/or substituted for beam-related information, beam direction, spatial domain transmission or reception filter, etc.

According to various embodiments of the present disclosure, that spatial configuration information for a transmission is the same may mean that the spatial domain transmission filter of a UE is the same for the two different transmission signals.

According to various embodiments of the disclosure, that spatial configuration information for reception is the same may mean that the two different received signals are in a QCL 'TypeD' relationship and/or use the same spatial reception parameters. The various schemes of the present disclosure may be applied differently per inter-UE communication (e.g., SL communication) channel. The various schemes of the present disclosure may be applied differently according to the type of information included in an inter-UE communication (e.g., SL communication) channel.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or whether it is PSFCH resource configured resource pool and/or a case where periodic resource reservation operation (and/or aperiodic resource reservation operation) is enabled/configured (or disabled/not configured) in a resource pool and/or a case where a partial sensing operation (and/or random resource selection operation) (and/or full sensing operation) is enabled/configured (or disabled/not configured) in a resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives a PSCCH (and/or PSSCH) (re)transmission from a transmitting UE and/or a case where a (transmitting) UE performing a packet transmission (and/or transmission resource (re)selection) performs a power saving operation (and/or an SL DRX operation) and/or a case where the remaining PDB value related to a transmit packet is greater than or equal to (or less than or equal to) a pre-configured threshold value and/or a case of a (TB-related) initial transmission (and/or retransmission) and/or a case where (pre-configured) channel access type (e.g., type 1, type 2A, type 2B, type 2C, semi-static channel occupancy) is performed and/or a case where a transmission/reception of a (pre-configured) SL channel/signal (e.g., SL SSB, PSCCH, PSSCH, PSFCH) is performed and/or an RB set (and/or channel and/or carrier)) (where a channel access operation is performed in unlicensed band) and/or a channel occupancy time (COT) and/or a TX burst and/or a discovery burst, etc.), whether the rule is applied (and/or the proposed method/rule-related parameter value of the present disclosure) may be specifically (or differently or independently) configured/allowed (and/or the appliance of the above rule may be limitedly configured/allowed). And, a combination of the proposal method (and/or proposal rule and/or embodiments) described in the present disclosure may be applied.

In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc.

In addition, in this disclosure, the "PSFCH" wording may be (mutually) extended and interpreted as "(NR or LTE) PSSCH (and/or (NR or LTE) PSCCH) (and/or (NR or LTE) SL SSB (and/or UL channel/signal))".

And, the methods proposed in the present disclosure may be used in combination with each other (in a new type of manner). In addition, in this disclosure, the wording "active time" (and/or "on-duration") may be (mutually) extended and interpreted as "on-duration" (and/or "active time").

According to one embodiment of the present disclosure, a method for determining a contention window size may be a combination of a plurality of methods. For example, the method may be, if there are multiple SL HARQ-ACK feedback groups that are referenced, and if the result determined based on a representative HARQ-ACK value of each group is not to maintain the $CW_p$ value for all or each CAPC and/or to reset to the initial value, to increase the $CW_p$ value for all or each CAPC to the next allowable value.

For example, if there are multiple factors that are referenced in configuring a contention window size, and if among the results determined per each factor, to increase the $CW_p$ value to the next allowable value and to maintain or initialize the $CW_p$ value are simultaneously occurred, the $CW_p$ value may be maintained and/or the $CW_p$ value may be initialized to a minimum value.

For example, if there are multiple factors that are referenced to configure a contention window size, and if among the results determined per each factor, to increase the $CW_p$ value to the next allowable value and to maintain or initialize the $CW_p$ value are simultaneously occurred, the $CW_p$ value may be increased to the next allowable value.

According to one embodiment of the present disclosure, a PSCCH/PSSCH referenced in determining a contention window size may be one that has been received within a specific time interval. For example, the specific time interval may exist within the earliest SL channel occupancy interval after a UE last updated its CWp.

According to one embodiment of the present disclosure, an operation in which CWp is initialized to a minimum value may be replaced by another specific value (e.g., a (pre-)configured value), and/or the specific value may be configured differently according to factors that control the size of the contention window.

In various embodiments of the present disclosure, for example, a reference duration may be an interval from the starting time point of the channel occupancy for a COT occupied by a UE (for sidelink communication) and/or a COT occupied by a base station (for sidelink communication) i) to the end time point of the first slot in which an actual specific sidelink transmission is performed for all allocated resources for sidelink transmission, or ii) to the end time point of the first transmission burst including an actual specific sidelink transmission for all allocated resources for sidelink transmission, or iii) to an earlier time point between the above end time points. For example, the specific sidelink transmission in the above may be a PSCCH/PSSCH transmission for unicast and/or groupcast and/or PSCCH/PSSCH with SL HARQ-ACK feedback enabled. For example, the length of a reference duration may be (pre-)configured per resource pool and/or per SL priority value of an SL transmission of a UE when a COT is initialized.

In various embodiments of the present disclosure, for example, different combinations of the above may be used according to whether the COT interval is initialized by a UE or a base station.

In various embodiments of the present disclosure, for example, adjusting the size of a contention window for sidelink may be performed per unicast session (group) and/or per cast type and/or per transmission priority value and/or per SL transmission with SL HARQ-ACK feedback enabled/disabled and/or per SL HARQ-ACK feedback option, respectively. For example, the adjustment of a contention window size may be performed for each of cases when a first UE performs an SL transmission to a second UE and when the first UE performs an SL transmission to a third UE. For example, in the HARQ-ACK based contention window adjustment, the HARQ-ACK may be limited to for a specific cast type and/or for a specific unicast session.

In various embodiments of the present disclosure, for example, adjusting the size of a contention window for a sidelink may be performed only based on a specific cast type (e.g., unicast or group cast) and/or PSSCH with SL HARQ-ACK feedback enabled.

In various embodiments of the present disclosure, for example, initializing a value of CW_p to each minimum value may be applied by replacing it with decreasing the value of CW_p to the previous allowable value.

For example, when TYPE 1 SL channel access, the size of a contention window may be (pre-)configured per priority class and/or per SL priority and/or per resource pool. For example, in any of the above cases, a UE may not perform any operation to adjust the size of the contention window.

In various embodiments of the present disclosure, for example, upon channel sensing operation according to a channel access type, a threshold value for determining whether a channel is busy or idle may be (pre-)configured and/or predefined per resource pool and/or per SL BWP and/or per RB set and/or per carrier and/or per SL transmission priority and/or per representative transmit power value (range) and/or per congestion control level.

Various embodiments of the present disclosure, for example, may be applied in different combinations of the above according to transmissions within or outside the COT (channel occupancy time). Various embodiments of the present disclosure, for example, may be applied in different combinations of the above according to the form of COT (e.g., semi-static form or time-varying form). For example, in the semi-static COT, the absence of other technologies sharing the same channel or RB set may be guaranteed for a specific period of time, such as by regulation. For example, in the semi-static COT, when it is for SL transmissions, the absence of DL and/or UL transmissions sharing the same channel or RB set for a specific period of time may be guaranteed, such as by regulation. For example, in the semi-static COT, if it is for DL and/or UL transmissions, the absence of SL transmissions sharing the same channel or RB set may be guaranteed for a specific period of time, such as by regulation. For example, in the semi-static COT, the absence of SL transmissions based on SL mode 2 resource (re)selection sharing the same channel or RB set for a specific period of time may be guaranteed, such as by regulation.

For example, the length of a fixed-frame period (FFP) and/or a time-axis offset value for the semi-static COT interval may be (pre-)configured per resource pool and/or per SL BWP and/or per carrier and/or per RB set and/or per congestion control level and/or per SL transmission priority value. For example, the length of a fixed-frame period (FFP) and/or a time axis offset value for the semi-static COT interval may be configured via inter-UE PC5-RRC signaling. For example, the (pre-)configured FFP may be overwritten via the PC5-RRC signaling. For example, the FFP configured via the PC5-RRC may be used limitedly to unicast transmissions corresponding to the PC5-RRC connection. Various embodiments of the present disclosure may be applied differently in different combinations of the above, according to carriers, according to the presence or absence of guards between RB sets, or according to regulations.

While adjustment of contention window size for all CAPCs is described in various embodiments of the present disclosure, the idea of the present disclosure may be extended and applied to a form of adjusting contention window size per specific CAPC or SL priority value.

In various embodiments of the present disclosure, for example, the method may be applied differently for each SL channel, for channel access type and whether/how it is indicated. In various embodiments of the present disclosure, for example, the method may be applied differently according to the type of information included in an SL channel, for a channel access type and whether/how it is indicated.

For example, the proposed method may be applied to a device described below. First, a processor 202 of a receiving UE may configure at least one BWP. And, a processor 202 of a receiving UE may control a transceiver 206 of a receiving UE to receive a sidelink-related physical channel and/or a sidelink-related reference signal from a transmitting UE over at least one BWP.

In FR2, during inter-UE communication (e.g., SL communication), a UE may perform transmission and/or reception based on multiple panels and/or beam directions. Here, a spatial setting, such as beam-related information or a spatial domain transmission/reception filter, etc. may need to be defined.

On the other hand, under the FR2 inter-UE communication (e.g., SL) operation environment, if a transmitting UE performs a sensing operation for resource selection related to its packet transmission in a sensing interval, if a reception beam/spatial filter used for the sensing operation in some sensing intervals does not cover the transmission beam/spatial filter used for packet transmission, since the inaccuracy of the sensing results related to the transmission beam/spatial filter used for packet transmission may increase, it is possible that the packet transmission performed by the transmitting UE may cause strong interference to the neighboring UE(s).

Here, for example, that a beam/spatial filter #X covers beam/spatial filter #Y may be interpreted as the beam/spatial filter #X and the beam/spatial filter #Y being mutually matched and/or the beam/spatial filter #X covering the beam/spatial filter #Y, in terms of the beam size/width, (boresight) direction, etc. Further, for example, the sensing interval in issue may be referred to herein as SLOT_MISS_SENSBEAM.

According to one embodiment of the present disclosure, a transmitting UE may determine whether it is idle/busy, by not using the sensing results on the SLOT_MISS_SENSBEAM interval, or by considering the SLOT_MISS_SENSBEAM interval as an area where monitoring is not performed, or by applying a pre-configured weight value to the sensing results on the SLOT_MISS_SENSBEAM interval (e.g., inter-UE reference signal received power (e.g., SL RSRP), or by applying an inter-UE reference signal received power (e.g., SL RSRP) separately pre-configured for the sensing results on the SLOT_MISS_SENSBEAM interval.

According to various embodiments of the present disclosure, the sensing results based on spatial filters that do not cover the spatial filter to be used in a transmission operation are not reflected in the transmission operation, and thus the possibility that the transmission operation performed by a transmitting UE causes interference to neighboring UEs may be reduced.

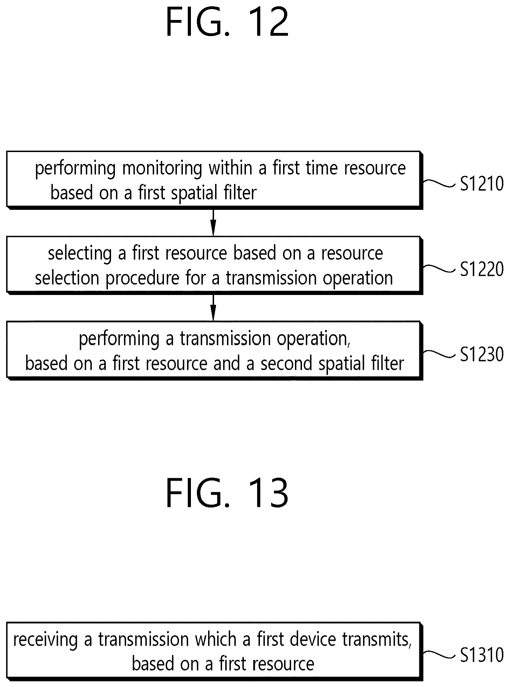

FIG. 12 shows a procedure for a first device to perform wireless communication, according to one embodiment of the present disclosure. The embodiment of FIG. 12 may be combined with various embodiments of the present disclosure.

Referring to FIG. 12, in step S1210, a first device may perform monitoring within a first time resource based on a first spatial filter. In step S1220, the first device may select a first resource based on a resource selection procedure for a transmission operation. In step S1230, the first device may perform the transmission operation, based on the first resource and a second spatial filter. For example, whether a result of the monitoring is used in the resource selection procedure may be determined based on whether the first spatial filter covers the second spatial filter.

For example, the result of the monitoring may be determined to be used in the resource selection procedure, based on the first spatial filter covering the second spatial filter.

For example, the result of the monitoring may be determined not to be used in the resource selection procedure, based on the first spatial filter not covering the second spatial filter.

For example, inter-device control information received through the monitoring may be not used in the resource selection procedure, based on the determination.

For example, the first time resource may be considered as a non-monitored slot in the resource selection procedure, based on the determination.

For example, a second reference signal reception power threshold value which is different from a first reference signal reception power threshold value in the resource selection procedure may be used, based on the first spatial filter not covering the second spatial filter, and the first reference signal reception power threshold value may be a threshold value which is used in the resource selection procedure based on the first spatial filter covering the second spatial filter.

For example, the second reference signal reception power threshold value may be a value derived by applying a weight value to the first reference signal reception power threshold value.

For example, the resource selection procedure may include: excluding at least one candidate resource from a candidate resource set based on the result of the monitoring and the second reference signal reception power threshold value; and initializing the candidate resource set, based on a number of remaining candidate resources in the candidate resource set being less than a threshold value after the exclusion, and the result of the monitoring may be determined not to be used in the resource selection procedure, based on the first spatial filter not covering the second spatial filter and the candidate resource set being initialized.

For example, the first resource may be randomly selected, based on the first spatial filter not covering the second spatial filter and the candidate resource set being initialized.

For example, the result of the monitoring may be determined to be used in the resource selection procedure, based on the first spatial filter not covering the second spatial filter.

For example, the first spatial filter may cover the second spatial filter, based on a first beam related to the first spatial filter including a second beam related to the second spatial filter.

For example, the first beam may include the second beam, based on a first boresight direction related to the first beam matching a second boresight direction related to the second beam.

For example, the first beam may include the second beam, based on a first size or a first width, related to the first beam, being greater than or equal to a second size or a second width, related to the second beam.

The embodiments described above may be applied to a various devices described below. For example, a processor 102 of a first device 100 may perform monitoring within a first time resource based on a first spatial filter. And, the processor 102 of the first device 100 may select a first resource based on a resource selection procedure for a transmission operation. And, the processor 102 of the first device 100 may control a transceiver 106 to perform the transmission operation, based on the first resource and a second spatial filter. For example, whether a result of the monitoring is used in the resource selection procedure may be determined based on whether the first spatial filter covers the second spatial filter.

According to an embodiment of the present disclosure, a first device for performing wireless communication may be proposed. For example, the first device may comprise: at least one transceiver; at least one processor; and at least one memory operably connectable to the at least one processor and storing instructions. For example, the instructions, based on being executed by the at least one processor, may cause the first device to perform operations, wherein the operations may comprise: performing monitoring within a first time resource based on a first spatial filter; selecting a first resource based on a resource selection procedure for a transmission operation; and performing the transmission operation, based on the first resource and a second spatial filter, wherein whether a result of the monitoring is used in the resource selection procedure may be determined based on whether the first spatial filter covers the second spatial filter.

For example, the result of the monitoring may be determined to be used in the resource selection procedure, based on the first spatial filter covering the second spatial filter.

For example, the result of the monitoring may be determined not to be used in the resource selection procedure, based on the first spatial filter not covering the second spatial filter.

For example, inter-device control information received through the monitoring may be not used in the resource selection procedure, based on the determination.

For example, the first time resource may be considered as a non-monitored slot in the resource selection procedure, based on the determination.

For example, a second reference signal reception power threshold value which is different from a first reference signal reception power threshold value in the resource selection procedure may be used, based on the first spatial filter not covering the second spatial filter, and the first reference signal reception power threshold value may be a threshold value which is used in the resource selection procedure based on the first spatial filter covering the second spatial filter.

For example, the second reference signal reception power threshold value may be a value derived by applying a weight value to the first reference signal reception power threshold value.

For example, the resource selection procedure may include: excluding at least one candidate resource from a candidate resource set based on the result of the monitoring and the second reference signal reception power threshold value; and initializing the candidate resource set, based on a number of remaining candidate resources in the candidate resource set being less than a threshold value after the exclusion, and the result of the monitoring may be determined not to be used in the resource selection procedure, based on the first spatial filter not covering the second spatial filter and the candidate resource set being initialized.

For example, the first resource may be randomly selected, based on the first spatial filter not covering the second spatial filter and the candidate resource set being initialized.

For example, the result of the monitoring may be determined to be used in the resource selection procedure, based on the first spatial filter not covering the second spatial filter.

For example, the first spatial filter may cover the second spatial filter, based on a first beam related to the first spatial filter including a second beam related to the second spatial filter.

For example, the first beam may include the second beam, based on a first boresight direction related to the first beam matching a second boresight direction related to the second beam.

For example, the first beam may include the second beam, based on a first size or a first width, related to the first beam, being greater than or equal to a second size or a second width, related to the second beam.

According to an embodiment of the disclosure, a device adapted to control a first user equipment, UE, may be proposed. For example, the device may comprise: at least one processor; and at least one memory operably connectable to the at least one processor and storing instructions. For example, the instructions, based on being executed by the at least one processor, may cause the first UE to perform operations, wherein the operations may comprise: performing monitoring within a first time resource based on a first spatial filter; selecting a first resource based on a resource selection procedure for a transmission operation; and performing the transmission operation, based on the first resource and a second spatial filter, wherein whether a result of the monitoring is used in the resource selection procedure may be determined based on whether the first spatial filter covers the second spatial filter.

According to an embodiment of the disclosure, a non-transitory computer-readable storage medium storing instructions may be proposed. For example, the instructions, based on being executed, may cause a first device to: perform monitoring within a first time resource based on a first spatial filter; select a first resource based on a resource selection procedure for a transmission operation; and perform the transmission operation, based on the first resource and a second spatial filter, wherein whether a result of the monitoring is used in the resource selection procedure may be determined based on whether the first spatial filter covers the second spatial filter.

FIG. 13 shows a procedure for a second device to perform wireless communication, according to one embodiment of the present disclosure. The embodiment of FIG. 13 may be combined with various embodiments of the present disclosure.

Referring to FIG. 13, in step S1310, a second device may receive a transmission which a first device transmits, based on a first resource. For example, a transmission operation for the transmission may be performed based on a second spatial filter, the first resource may be selected based on a resource selection procedure, and whether a result of monitoring performed within a first time resource is used in the resource selection procedure may be determined, based on whether a first spatial filter on which the monitoring is based covers the second spatial filter.

For example, a second reference signal reception power threshold value which is a value derived by applying a weight value to a first reference signal reception power threshold value may be used in the resource selection procedure, based on the first spatial filter not covering the second spatial filter, the first reference signal reception power threshold value may be a threshold value used in the resource selection procedure based on the first spatial filter covering to second spatial filter, the resource selection procedure may include: excluding at least one candidate resource from a candidate resource set based on the result of the monitoring and the second reference signal reception power threshold value; and initializing the candidate resource set, based on a number of remaining candidate resources in the candidate resource set being less than a threshold value after the exclusion, and the result of the monitoring may be determined not to be used in the resource selection procedure, based on the first spatial filter not covering the second spatial filter and the candidate resource set being initialized.

The embodiments described above may be applied to various devices described below. For example, a processor 202 of a second device 200 may control a transceiver 206 to receive a transmission which a first device 100 transmits, based on a first resource. For example, a transmission operation for the transmission may be performed based on a second spatial filter, the first resource may be selected based on a resource selection procedure, and whether a result of monitoring performed within a first time resource is used in the resource selection procedure may be determined, based on whether a first spatial filter on which the monitoring is based covers the second spatial filter.

According to an embodiment of the present disclosure, a second device for performing wireless communication may be proposed. For example, the second device may comprise: at least one transceiver; at least one processor; and at least one memory operably connectable to the at least one processor and storing instructions. For example, the instructions, based on being executed by the at least one processor, may cause the second device to perform operations, wherein the operations may comprise: receiving a transmission which a first device transmits, based on a first resource, wherein a transmission operation for the transmission may be performed based on a second spatial filter, wherein the first resource may be selected based on a resource selection procedure, and wherein whether a result of monitoring performed within a first time resource is used in the resource selection procedure may be determined, based on whether a first spatial filter on which the monitoring is based covers the second spatial filter.

For example, a second reference signal reception power threshold value which is a value derived by applying a weight value to a first reference signal reception power threshold value may be used in the resource selection procedure, based on the first spatial filter not covering the second spatial filter, the first reference signal reception power threshold value may be a threshold value used in the resource selection procedure based on the first spatial filter covering to second spatial filter, the resource selection procedure may include: excluding at least one candidate resource from a candidate resource set based on the result of the monitoring and the second reference signal reception power threshold value; and initializing the candidate resource set, based on a number of remaining candidate resources in the candidate resource set being less than a threshold value after the exclusion, and the result of the monitoring may be determined not to be used in the resource selection procedure, based on the first spatial filter not covering the second spatial filter and the candidate resource set being initialized.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

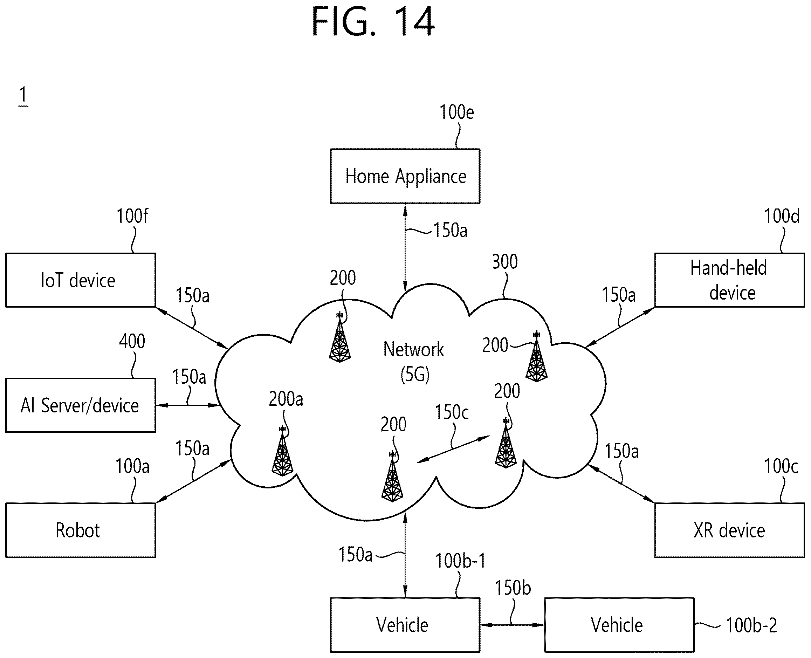

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

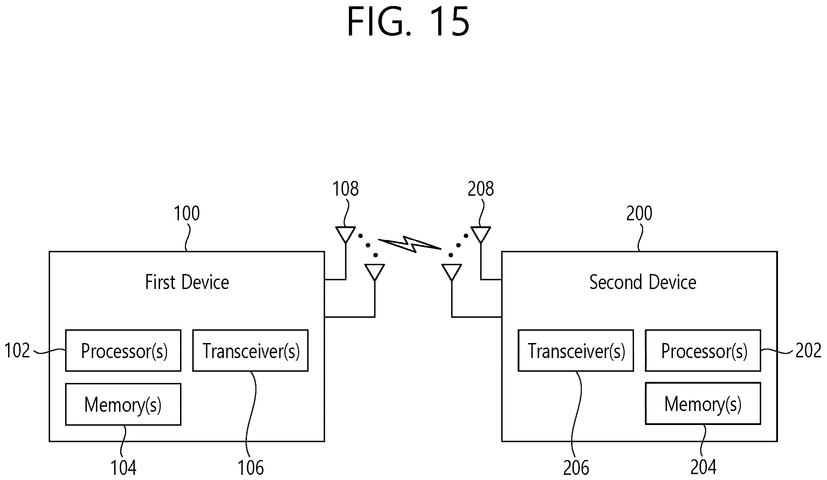

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

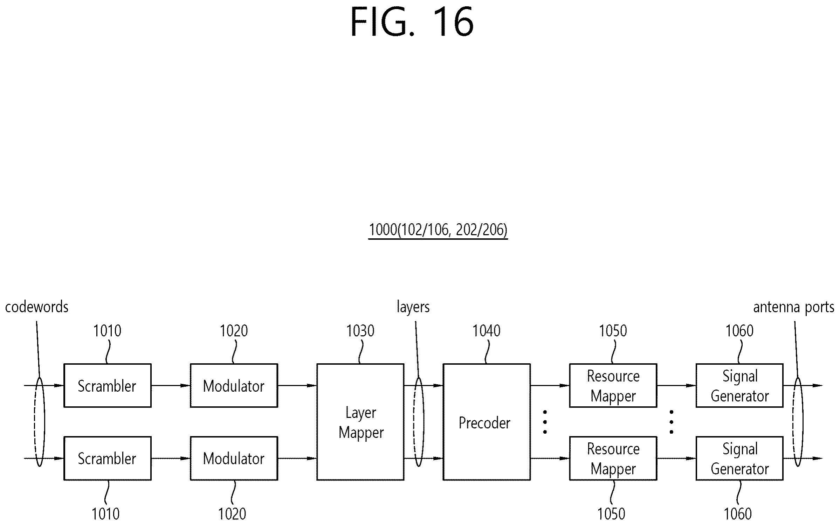

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

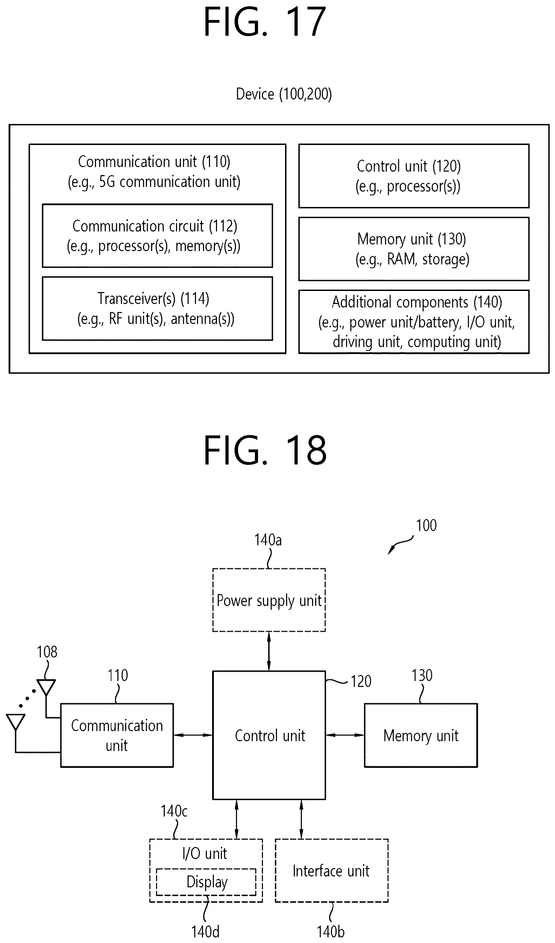

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

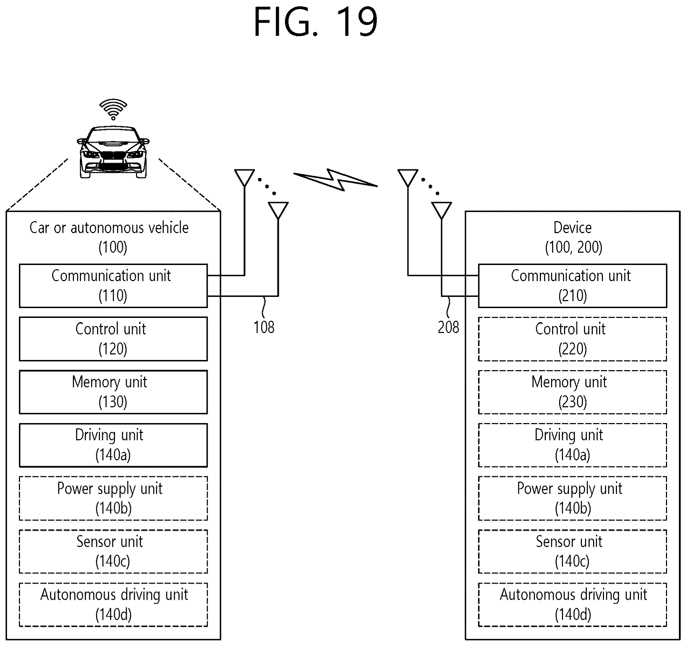

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing, by a first device, wireless communication, the method comprising:

   performing monitoring within a first time resource based on a first spatial filter;
   selecting a first resource based on a resource selection procedure for a transmission operation; and
   performing the transmission operation, based on the first resource and a second spatial filter,
   wherein whether a result of the monitoring is used in the resource selection procedure is determined based on whether the first spatial filter covers the second spatial filter.

2. The method of claim 1, wherein the result of the monitoring is determined to be used in the resource selection procedure, based on the first spatial filter covering the second spatial filter.

3. The method of claim 1, wherein the result of the monitoring is determined not to be used in the resource selection procedure, based on the first spatial filter not covering the second spatial filter.

4. The method of claim 3, wherein inter-device control information received through the monitoring is not used in the resource selection procedure, based on the determination.

5. The method of claim 3, wherein the first time resource is considered as a non-monitored slot in the resource selection procedure, based on the determination.

6. The method of claim 1, wherein a second reference signal reception power threshold value which is different from a first reference signal reception power threshold value in the resource selection procedure is used, based on the first spatial filter not covering the second spatial filter, and
   wherein the first reference signal reception power threshold value is a threshold value which is used in the resource selection procedure based on the first spatial filter covering the second spatial filter.

7. The method of claim 6, wherein the second reference signal reception power threshold value is a value derived by applying a weight value to the first reference signal reception power threshold value.

8. The method of claim 7, wherein the resource selection procedure includes:

   excluding at least one candidate resource from a candidate resource set based on the result of the monitoring and

# EP 4 668 925 A1

the second reference signal reception power threshold value; and

initializing the candidate resource set, based on a number of remaining candidate resources in the candidate resource set being less than a threshold value after the exclusion, and

wherein the result of the monitoring is determined not to be used in the resource selection procedure, based on the first spatial filter not covering the second spatial filter and the candidate resource set being initialized.

9. The method of claim 8, wherein the first resource is randomly selected, based on the first spatial filter not covering the second spatial filter and the candidate resource set being initialized.

10. The method of claim 6, wherein the result of the monitoring is determined to be used in the resource selection procedure, based on the first spatial filter not covering the second spatial filter.

11. The method of claim 1, wherein the first spatial filter covers the second spatial filter, based on a first beam related to the first spatial filter including a second beam related to the second spatial filter.

12. The method of claim 11, wherein the first beam includes the second beam, based on a first boresight direction related to the first beam matching a second boresight direction related to the second beam.

13. The method of claim 11, wherein the first beam includes the second beam, based on a first size or a first width, related to the first beam, being greater than or equal to a second size or a second width, related to the second beam.

14. A first device for performing wireless communication, the first device comprising:

at least one transceiver;

at least one processor; and

at least one memory operably connectable to the at least one processor and storing instructions that, based on being executed by the at least one processor, cause the first device to perform operations,

wherein the operations comprise:

performing monitoring within a first time resource based on a first spatial filter;

selecting a first resource based on a resource selection procedure for a transmission operation; and

performing the transmission operation, based on the first resource and a second spatial filter,

wherein whether a result of the monitoring is used in the resource selection procedure is determined based on whether the first spatial filter covers the second spatial filter.

15. A device adapted to control a first user equipment, UE, the device comprising:

at least one processor; and

at least one memory operably connectable to the at least one processor and storing instructions that, based on being executed by the at least one processor, cause the first UE to perform operations,

wherein the operations comprise:

performing monitoring within a first time resource based on a first spatial filter;

selecting a first resource based on a resource selection procedure for a transmission operation; and

performing the transmission operation, based on the first resource and a second spatial filter,

wherein whether a result of the monitoring is used in the resource selection procedure is determined based on whether the first spatial filter covers the second spatial filter.

16. A non-transitory computer-readable storage medium storing instructions that, based on being executed, cause a first device to:

perform monitoring within a first time resource based on a first spatial filter;

select a first resource based on a resource selection procedure for a transmission operation; and

perform the transmission operation, based on the first resource and a second spatial filter,

wherein whether a result of the monitoring is used in the resource selection procedure is determined based on whether the first spatial filter covers the second spatial filter.

17. A method for performing, by a second device, wireless communication, the method comprising:

49

receiving a transmission which a first device transmits, based on a first resource,
wherein a transmission operation for the transmission is performed based on a second spatial filter,
wherein the first resource is selected based on a resource selection procedure, and
wherein whether a result of monitoring performed within a first time resource is used in the resource selection procedure is determined, based on whether a first spatial filter on which the monitoring is based covers the second spatial filter.

18. The method of claim 17, wherein a second reference signal reception power threshold value which is a value derived by applying a weight value to a first reference signal reception power threshold value is used in the resource selection procedure, based on the first spatial filter not covering the second spatial filter,

wherein the first reference signal reception power threshold value is a threshold value used in the resource selection procedure based on the first spatial filter covering to second spatial filter,
wherein the resource selection procedure includes:

excluding at least one candidate resource from a candidate resource set based on the result of the monitoring and the second reference signal reception power threshold value; and
initializing the candidate resource set, based on a number of remaining candidate resources in the candidate resource set being less than a threshold value after the exclusion, and
wherein the result of the monitoring is determined not to be used in the resource selection procedure, based on the first spatial filter not covering the second spatial filter and the candidate resource set being initialized.

19. A second device for performing wireless communication, the second device comprising:

at least one transceiver;
at least one processor; and
at least one memory operably connectable to the at least one processor and storing instructions that, based on being executed by the at least one processor, cause the second device to perform operations,
wherein the operations comprise:

receiving a transmission which a first device transmits, based on a first resource,
wherein a transmission operation for the transmission is performed based on a second spatial filter,
wherein the first resource is selected based on a resource selection procedure, and
wherein whether a result of monitoring performed within a first time resource is used in the resource selection procedure is determined, based on whether a first spatial filter on which the monitoring is based covers the second spatial filter.

20. The second device of claim 19, wherein a second reference signal reception power threshold value which is a value derived by applying a weight value to a first reference signal reception power threshold value is used in the resource selection procedure, based on the first spatial filter not covering the second spatial filter,

wherein the first reference signal reception power threshold value is a threshold value used in the resource selection procedure based on the first spatial filter covering to second spatial filter,
wherein the resource selection procedure includes:

excluding at least one candidate resource from a candidate resource set based on the result of the monitoring and the second reference signal reception power threshold value; and
initializing the candidate resource set, based on a number of remaining candidate resources in the candidate resource set being less than a threshold value after the exclusion, and
wherein the result of the monitoring is determined not to be used in the resource selection procedure, based on the first spatial filter not covering the second spatial filter and the candidate resource set being initialized.

FIG. 1

# FIG. 2

Radio | Microwave | Infrared | Visible | Ultraviolet | X-Ray | Gamma-Ray

mmWave | Terahertz

**Wavelength:** $10^8$ m   1m   10mm   1mm   0.1mm   700nm   390nm   10nm   0.01nm

**Radiation Type**

**Frequency:** 3 Hz   300 MHz   30 GHz   300 GHz   3 THz   430 THz   730 THz   30 PHz   30 EHz

Mega : $10^6$    Giga : $10^9$    Tera : $10^{12}$    Peta : $10^{15}$    Exa : $10^{18}$

# FIG. 3

Satellite
(or UAS platform)

Service
link

Feeder link

Gateway

Data network

Beam foot
print

User
Equipments

Field of view of the satellite
(or UAS platform)

EP 4 668 925 A1

# FIG. 4

Satellite (or UAS platform)

Satellite (or UAS platform)

ISL

Feeder link

Service link

Feeder link (mandatory if on ISL)

Gateway

Data network

User Equipments

Beam foot print

Field of view of the satellite (or UAS platform)

EP 4 668 925 A1

# FIG. 5

(a)

(b)

EP 4 668 925 A1

## FIG. 6

Resource grid

1RB=12 subcarriers

A BWP

A carrier
(up to 3300 subcarriers,
i.e., 275 RBs)

1 RE

1subcarrier

1 symbol

k=0

l=0

# FIG. 7

# FIG. 8

(a)

(b)

# FIG. 9

(a)

☐ : PSSCH   ☐ : PSCCH

(b)

☐ : PSSCH   ☐ : PSCCH

(c)

☐ : PSSCH   ☐ : PSCCH

# FIG. 10

# FIG. 11

# FIG. 12

performing monitoring within a first time resource based on a first spatial filter — S1210

selecting a first resource based on a resource selection procedure for a transmission operation — S1220

performing a transmission operation, based on a first resource and a second spatial filter — S1230

# FIG. 13

receiving a transmission which a first device transmits, based on a first resource — S1310

# FIG. 14

EP 4 668 925 A1

# FIG. 15

# FIG. 16

# FIG. 17

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 18

100

140a

Power supply unit

108

110

Communication
unit

120

Control unit

130

Memory unit

140c

I/O unit

Display

Interface unit

140d

140b

# FIG. 19

**Car or autonomous vehicle (100)**
- Communication unit (110)
- Control unit (120)
- Memory unit (130)
- Driving unit (140a)
- Power supply unit (140b)
- Sensor unit (140c)
- Autonomous driving unit (140d)

108

**Device (100, 200)**
- Communication unit (210)
- Control unit (220)
- Memory unit (230)
- Driving unit (140a)
- Power supply unit (140b)
- Sensor unit (140c)
- Autonomous driving unit (140d)

208

## INTERNATIONAL SEARCH REPORT

| International application No. |
| --- |
| **PCT/KR2024/095300** |

| A. | CLASSIFICATION OF SUBJECT MATTER |
| --- | --- |
| | **H04W 72/02**(2009.01)i; **H04W 72/25**(2023.01)i; **H04W 72/04**(2009.01)i; **H04B 17/318**(2015.01)i; **H04W 92/18**(2009.01)i |

According to International Patent Classification (IPC) or to both national classification and IPC

| B. | FIELDS SEARCHED |
| --- | --- |

Minimum documentation searched (classification system followed by classification symbols)

H04W 72/02(2009.01); H04W 4/06(2009.01); H04W 64/00(2009.01); H04W 72/04(2009.01); H04W 72/21(2023.01); H04W 72/232(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공간필터(spatial filter), 빔(beam), 자원(resource), 선택(selection), 모니터링(monitoring)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2020-0016192 A (ASUSTEK COMPUTER INCORPORATION) 14 February 2020 (2020-02-14)<br>See paragraph [0336]. | 1-2,11-17,19 |
| A | | 3-10,18,20 |
| Y | KR 10-2023-0006490 A (IDAC HOLDINGS, INC.) 10 January 2023 (2023-01-10)<br>See paragraphs [0082]-[0117]. | 1-2,11-17,19 |
| Y | KR 10-2022-0164610 A (QUALCOMM INCORPORATED) 13 December 2022 (2022-12-13)<br>See paragraphs [0119]-[0122]. | 11-13 |
| A | WO 2019-083625 A1 (QUALCOMM INCORPORATED) 02 May 2019 (2019-05-02)<br>See claims 1-14. | 1-20 |
| A | WO 2022-170622 A1 (QUALCOMM INCORPORATED) 18 August 2022 (2022-08-18)<br>See paragraphs [0077]-[0093]. | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 May 2024** | **16 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/095300**

| Patent document cited in search report | | | Publication date (day/month/year) | Patent family member(s) | | | Publication date (day/month/year) |
|---|---|---|---|---|---|---|---|
| KR | 10-2020-0016192 | A | 14 February 2020 | CN | 110809323 | A | 18 February 2020 |
| | | | | CN | 110809323 | B | 16 June 2023 |
| | | | | US | 11611972 | B2 | 21 March 2023 |
| | | | | US | 2020-0045715 | A1 | 06 February 2020 |
| KR | 10-2023-0006490 | A | 10 January 2023 | BR | 112022020876 | A2 | 20 December 2022 |
| | | | | CN | 115516781 | A | 23 December 2022 |
| | | | | EP | 4136771 | A1 | 22 February 2023 |
| | | | | TW | 202142037 | A | 01 November 2021 |
| | | | | US | 2023-0148282 | A1 | 11 May 2023 |
| | | | | WO | 2021-211425 | A1 | 21 October 2021 |
| | | | | WO | 2021-211425 | A8 | 03 November 2022 |
| KR | 10-2022-0164610 | A | 13 December 2022 | BR | 112022023189 | A2 | 20 December 2022 |
| | | | | CN | 115777178 | A | 10 March 2023 |
| | | | | EP | 4158793 | A1 | 05 April 2023 |
| | | | | JP | 2023-524164 | A | 08 June 2023 |
| | | | | JP | 7354465 | B2 | 02 October 2023 |
| | | | | TW | 202203667 | A | 16 January 2022 |
| | | | | US | 11353543 | B2 | 07 June 2022 |
| | | | | US | 2021-0373118 | A1 | 02 December 2021 |
| | | | | WO | 2021-242599 | A1 | 02 December 2021 |
| WO | 2019-083625 | A1 | 02 May 2019 | BR | 112020007828 | A2 | 20 October 2020 |
| | | | | CA | 3075975 | A1 | 02 May 2019 |
| | | | | CN | 111295916 | A | 16 June 2020 |
| | | | | CN | 111295916 | B | 09 June 2023 |
| | | | | EP | 3701756 | A1 | 02 September 2020 |
| | | | | JP | 2021-500809 | A | 07 January 2021 |
| | | | | JP | 7216724 | B2 | 01 February 2023 |
| | | | | KR | 10-2020-0073221 | A | 23 June 2020 |
| | | | | US | 10735923 | B2 | 04 August 2020 |
| | | | | US | 2019-0124490 | A1 | 25 April 2019 |
| WO | 2022-170622 | A1 | 18 August 2022 | BR | 112023015626 | A2 | 09 January 2024 |
| | | | | CN | 116848916 | A | 03 October 2023 |
| | | | | EP | 4292356 | A1 | 20 December 2023 |
| | | | | KR | 10-2023-0142720 | A | 11 October 2023 |

Form PCT/ISA/210 (patent family annex) (July 2022)